# EUROPEAN PATENT SPECIFICATION

(11) **EP 3 793 231 B1**
(45) Date of publication and mention of the grant of the patent: **15.11.2023**
(21) Application number: 19799882.6
(22) Date of filing: 09.05.2019
(51) Int. Cl.: H04W 8/24, H04W 36/00, H04W 88/02, H04W 60/00

(54) **USER EQUIPMENT SUPPORTING SRVCC**
SRVCC UNTERSTÜTZENDES BENUTZERENDGERÄT
ÉQUIPEMENT UTILISATEUR SUPPORTANT SRVCC

(30) Priority: 11.05.2018 JP 2018092184
(43) Date of publication of application: 17.03.2021
(73) Proprietor: Sharp Kabushiki Kaisha, Sakai-shi Osaka 590-8522 (JP); FG INNOVATION COMPANY LIMITED, New Territories, Hong Kong SAR (HK)
(72) Inventor: ARAMOTO, Masafumi, Sakai City, Osaka 590-8522 (JP)
(74) Representative: Müller Hoffmann & Partner
(86) International application number: PCT/JP2019/018646
(87) International publication number: WO 2019/216392

(56) References cited:
- US-B2- 6 512 924
- "3rd Generation Partnership Project; Technical Specification Group Services and System Aspects; Study for single radio voice continuity from 5GS to 3G (Release 16)", 3GPP STANDARD; TECHNICAL REPORT; 3GPP TR 23.756, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V0.1.0, 1 May 2018 (2018-05-01), pages 1-13, XP051451248, [retrieved on 2018-05-01]
- ZTE ET AL: "Solution on reusing the mechanism in EPS SRVCC to enable the 5G SRVCC", 3GPP DRAFT; S2-184485 SOLUTION ON REUSING THE MECHANISM IN EPS SRVCC TO ENABLE THE 5G SRVCC, 3RD GENERATION PARTNERSHIP PROJECT (3GPP), MOBILE COMPETENCE CENTRE ; 650, ROUTE DES LUCIOLES ; F-06921 SOP , vol. SA WG2, no. Sanya, China; 20180416 - 20180420 20 April 2018 (2018-04-20), XP051433050, Retrieved from the Internet: URL:http://www.3gpp.org/ftp/Meetings%5F3GP P%5FSYNC/SA2/Docs/ [retrieved on 2018-04-20]
- ANITE: "Correction to UTRA test case 12.4.1.4c proc 1", 3GPP DRAFT; 34123-3_CR3089_(REL-10)_R5S130458, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG5 27 August 2013 (2013-08-27), XP050724441, Retrieved from the Internet: URL:http://www.3gpp.org/ftp/tsg_ran/WG5_Te st_ex-T1/Working_documents/draft_CR_packs_ for_RP-61/ [retrieved on 2013-08-27]
- VIVO: "Registration for 5G to 3G SRVCC", 3GPP DRAFT; S2-183507, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Sanya, China; 20180416 - 20180420 10 April 2018 (2018-04-10), XP051437819, Retrieved from the Internet: URL:http://www.3gpp.org/ftp/tsg%5Fsa/WG2%5 FArch/TSGS2%5F127%5FSanya/Docs/ [retrieved on 2018-04-10]
- CHINA UNICOM ET AL: "Potential implementations of voice service continuity from 5G to 2/3G", 3GPP DRAFT; S1-174157 POTENTIAL IMPLEMENTATIONS OF VOICE SERVICE CONTINUITY FROM 5G TO 3G OR 2G, 3RD GENERATION PARTNERSHIP PROJECT (3GPP), MOBILE COMPETENCE CENTRE ; 650, ROUTE DES LUCIOLES ; F-06921 , vol. SA WG1, no. Reno, USA; 20171125 - 20171201 15 November 2017 (2017-11-15), XP051378788, Retrieved from the Internet: URL:http://www.3gpp.org/ftp/tsg%5Fsa/WG1%5 FServ/TSGS1%5F80%5FReno/docs/ [retrieved on 2017-11-15]
- CHINA UNICOM et al.: "Potential implementations of voice service continuity from 5G to 2/3G", 3GPP TSG SA WG1 #80 S1-174157, 15 November 2017 (2017-11-15), XP051378788, Retrieved from the Internet: URL:http://www.3gpp.org/ftp/tsg_sa/WGl_Ser v/TSGSl_80_Reno/docs/Sl-174157.zip
- 3GPP TSG SA2: "LS response on Capability Indicator for SRVCC from UTRAN/GERAN to E-UTRAN/HSPA", 3GPP TSG-SA WG2 #91 S2-122624, 25 May 2012 (2012-05-25), XP050648885, Retrieved from the Internet: URL:http://www.3gpp.org/ftp/tsg_sa/WG2_Arc h/TSGS2_91_Kyoto/Docs/S2-122624.zip
- HUAWEI: "Overview of Single Radio Voice Call Continuity from UTRAN/GERAN to E-UTRAN/HSPA", 3GPP TSG-RAN WG3 #73bis R3-112338, 19 October 2011 (2011-10-19), XP050542027, Retrieved from the Internet: URL:http://www.3gpp.org/ftp/tsg_ran/WG3_Iu /TSGR3_73bis/Docs/R3-112338.zip

## Description

### Technical Field

The invention relates to mobile communications, and in particular to Single Radio Voice Call Continuity SRVCC.

### Background Art

The 3rd Generation Partnership Project (3GPP), which undertakes activities for standardizing recent mobile communication systems, has studied System Architecture Evolution (SAE) which is a system architecture of Long Term Evolution (LTE). The 3GPP is in the process of drafting specifications of Evolved Packet System (EPS) as a communication system for realizing an all-Internet Protocol (IP) architecture. Note that a core network constituting the EPS is referred to as an Evolved Packet Core (EPC), and an access network constituting the EPS is referred to as an Evolved Universal Terrestrial Radio Access Network (E-UTRAN).

Also, in order to provide a voice call service and/or a video call service on an all-IP network, a system called IP Multimedia Subsystem (IMS) needs to be supported.

Additionally, the 3GPP has recently studied next-generation communication technologies and system architectures for a 5th generation (5G) mobile communication system which is a next generation mobile communication system, and in particular, has drafted specifications of a 5G system (5GS) as a system for realizing a 5G mobile communication system (see NPL 1 and NPL 2). In the 5GS, technical problems attributable to connection of various terminals to a cellular network are extracted to draft specification of solutions.

For example, a study is underway to draft specifications of optimization or the like of a core network, an access network, and an IMS for continuing a voice call or a video call even in a case that a network to which a terminal during performing the voice call or the video call connects is switched over.

3rd Generation Partnership Project; Technical Specification Group Services and System Aspects; Study for single radio voice continuity from 5GS to 3G (Release 16)", 3GPP STANDARD; TECHNICAL REPORT; 3GPP TR 23.756, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, V0.1.0, 1 May 2018 (2018-05-01), pages 1 - 13, XP051451248 relates to mechanisms for SRVCC from NG-RAN to UTRAN.ZTE ET AL, "Solution on reusing the mechanism in EPS SRVCC to enable the 5G SRVCC", 3GPP DRAFT; S2-184485 SOLUTION ON REUSING THE MECHANISM IN EPS SRVCC TO ENABLE THE 5G SRVCC, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, SA WG2, Sanya, China; 20180416 - 20180420 20 April 2018 (2018-04-20), XP051433050 relates to a solution on reusing mechanisms in EPS SRVCC to enable 5G SRVCC.

ANITE, "Correction to UTRA test case 12.4.1.4c proc 1", 3GPP DRAFT; 34123-3_CR3089_(REL-10)_R5S130458, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, RAN WG5, 27 August 2013 (2013-08-27), XP050724441 relates to corrections to an UTRA test case 12.4.1.4c proc 1.

US 6 512 924 B2 relates to a mobile communication system including a mobile station and a database of a mobile network which registers a location of the mobile station.

### Citation List

### Non Patent Literature

NPL 1: 3GPP TS 23.501 v15.1.0; 3rd Generation Partnership Project; Technical Specification Group Services and System Aspects; System Architecture for the 5G System; Stage 2 (Release 15)
NPL 2: 3GPP TS 23.502 v15.1.0; 3rd Generation Partnership Project; Technical Specification Group Services and System Aspects; Procedures for the 5G System; Stage 2 (Release 15)
NPL 3: 3GPP TS 24.501 v1.0.0; 3rd Generation Partnership Project; Technical Specification Group Core Network and Terminals; Non-Access-Stratum (NAS) protocol for 5G System (5GS); Stage 3 (Release 15)
NPL 4: 3GPP TS 24.502 v0.4.0; 3rd Generation Partnership Project; Technical Specification Group Core Network and Terminals; Access to the 3GPP 5G Core Network (5GCN) via non-3GPP access networks; Stage 3 (Release 15)
NPL 5: 3GPP TS 24.301 V15.2.0; 3rd Generation Partnership Project; Technical Specification Group Core Network and Terminals; Non-Access-Stratum (NAS) protocol for Evolved Packet System (EPS); Stage 3 (Release 15)
NPL 6: 3GPP TS 23.401 V15.3.0; 3rd Generation Partnership Project; Technical Specification Group Services and System Aspects; General Packet Radio Service (GPRS) enhancements for Evolved Universal Terrestrial Radio Access Network (E-UTRAN) access (Release 15)
NPL 7: 3GPP TS 24.229 v15.2.0; 3rd Generation Partnership Project; Technical Specification Group Core Network and Terminals; IP multimedia call control protocol based on Session Initiation Protocol (SIP) and Session Description Protocol (SDP); Stage 3 (Release 15)
NPL 8: 3GPP TS 23.228 v15.2.0; 3rd Generation Partnership Project; Technical Specification Group Services and System Aspects; IP Multimedia Subsystem (IMS); Stage 2 (Release 15)
NPL 9: 3GPP TS 23.237 V15.1.0; 3rd Generation Partnership Project; Technical Specification Group Services and System Aspects; IP Multimedia Subsystem (IMS) Service Continuity; Stage 2 (Release 15)
NPL 10: 3GPP TS 24.008 V15.2.0; 3rd Generation Partnership Project; Technical Specification Group Core Network and Terminals; Mobile radio interface Layer 3 specification; Core network protocols; Stage 3 (Release 15)
NPL 11: 3GPP TS 23.216 V15.1.0; 3rd Generation Partnership Project; Technical Specification Group Services and System Aspects; Single Radio Voice Call Continuity (SRVCC); Stage 2 (Release 15)

### Summary of Invention

### Technical Problem

With respect to the 5G System (5GS), a known IP Multimedia Subsystem (IMS) being applied to the 5GS to support mobile communication voice call services has been studied. Specifically, a study is underway to draft specifications for providing voice call services and/or video call services in mobile communications suitable for UEs and network apparatuses by exchanging various types of capability information in the voice call services and/or the video call services between to a terminal (User Equipment (UE)) and access network and/or core network apparatuses, and the like.

On the other hand, conventionally, specifications of Single Radio Voice Call Continuity (SRVCC), Single Radio Video Call Continuity (vSRVCC), and the like have been drafted as a technique for continuing a voice call or a video call even in a case of switching over to a circuit switched network (CS network) while a UE is performing the voice call or the video call via a packet switching network (PS network) such as the Evolved Packet System (EPS). However, no solution is disclosed to enable the continuation of a voice call or video call in a case that handover from the 5GS to the CS network is performed.

The present invention has been made in view of such circumstances, and has an object to provide a measure to enable a voice call or a video call to continue even in a case of switching over to a circuit switched network during performing the voice call or the video call over a 5G network, based on capability information of a user equipment that the user equipment transmits in a registration procedure with respect to a 5G core network.

### Solution to Problem

The invention is defined by the appended claims. The following examples of the present disclosure may include some but not all features as literally defined in the claims and are present for illustration purposes only.

A UE according to an example of the present disclosure includes a controller configured to include first identification information in a registration request message in changing at least Mobile Station Classmark 2 and/or a codec to be supported in a case that the UE supports Single Radio Voice Call Continuity (SRVCC) from a Next Generation Radio Access Network (NG-RAN) to a Universal Terrestrial Radio Access Network (UTRAN), and a transmission and/or reception unit configured to transmit the registration request message including the first identification information to a core network, wherein the first identification information is capability information indicating support of the SRVCC from a Universal Terrestrial Radio Access Network (UTRAN) or a High Speed Packet Access (HSPA) or an Evolved UTRAN (E-UTRAN) or the NG-RAN to a 2G radio access network or the UTRAN.

### Advantageous Effects of Invention

According to the present invention, a mobile communication service can be provided that is capable of continuing a voice call or a video call even in a case that a network to which a terminal during performing the voice call or the video call over a 5GS connects is switched over to a CS network.

### Brief Description of Drawings

FIG. 1 is a diagram illustrating an overview of a mobile communication system.
FIG. 2 is a diagram illustrating an example of a configuration and the like of core networks and access networks in the mobile communication system.
FIG. 3 is a diagram illustrating schematic connection of an IMS and core networks for a voice call service and/or a video call service.
FIG. 4 is a diagram illustrating an abnormal case 2 in a second procedure.
FIG. 5 is a diagram illustrating an apparatus configuration of a UE.
FIG. 6 is a diagram illustrating a configuration of an access network apparatus.
FIG. 7 is a diagram illustrating an apparatus configuration of an MME/AMF.
FIG. 8 is a diagram illustrating an apparatus configuration of an SMF/PGW/UPF.
FIG. 9 is a diagram illustrating an apparatus configuration of a CSCF.
FIG. 10 is a diagram illustrating procedures for respective embodiments.
FIG. 11 is a diagram illustrating a registration procedure.
FIG. 12 is a diagram illustrating a normal case and an abnormal case 1 in the second procedure.

### Description of Embodiments

A preferred embodiment for carrying out the present invention will be described below with reference to the drawings. Note that, as an example, an embodiment of a mobile communication system to which the present invention is applied will be described in the present embodiment.

### 1. System Overview

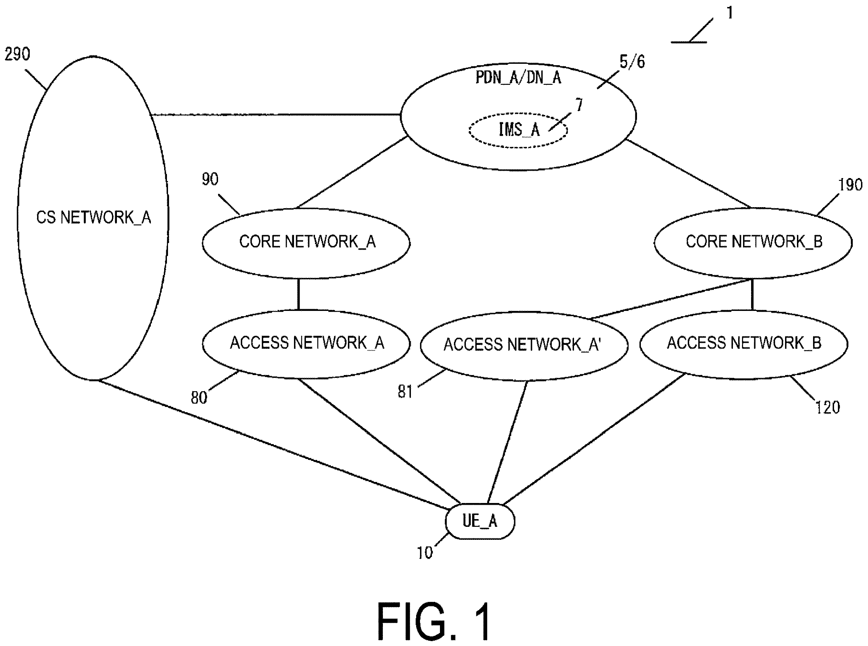

A mobile communication system according to the present embodiment will be described with reference to FIG. 1, FIG. 2, and FIG. 3.

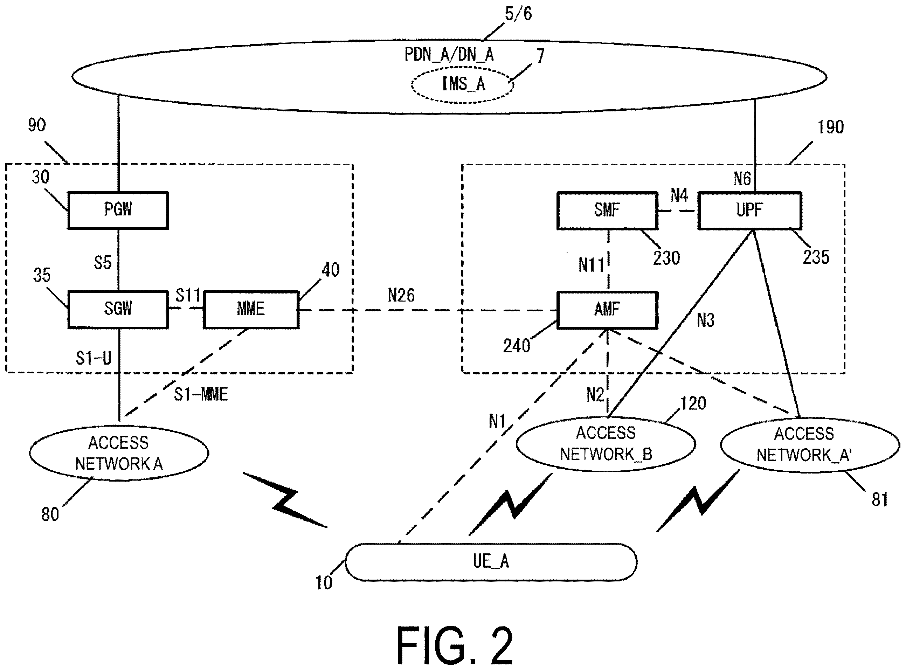

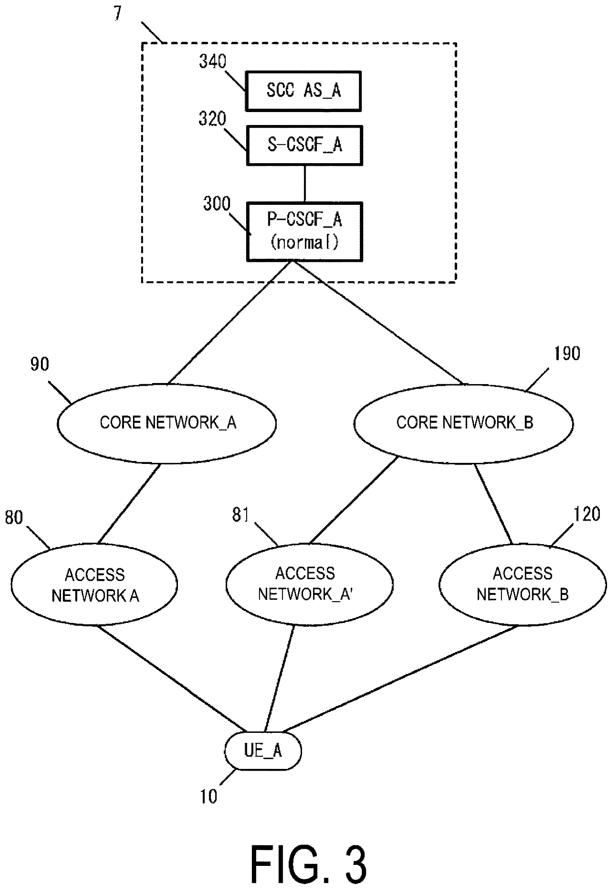

FIG. 1 is a diagram illustrating an overview of a mobile communication system 1. FIG. 2 is a diagram illustrating an example of a configuration of access networks and core networks in the mobile communication system of FIG. 1. FIG. 3 is a diagram mainly illustrating an example of a connection configuration of an IP Multimedia Subsystem (IMS) and core networks in the mobile communication system of FIG. 1.

As illustrated in FIG. 1, the mobile communication system 1 according to the present embodiment includes a User Equipment (UE)_A 10 (also referred to as a terminal apparatus or a mobile terminal apparatus), a Circuit Switched (CN) network_A 290 (also referred to as a circuit switching network), an Access Network (AN)_A 80, an access network_A' 81, an access network_B 120, and a Core Network (CN)_B 190, a core network_A 90, a Data Network (DN)_A 5, a Packet Data Network (PDN)_B 6, and an IMS_A 7. Note that, for the sake of simplicity, the core network_A and/or the core network_B and/or the CS network_A, or a combination thereof may also be referred to as a core network, the access network_A 80 and/or the access network_A' 81 and/or the access network_B and/or the CS network_A, or a combination thereof may also be referred to as an access network or a radio access network, the DN_A 5, the PDN_A 6, or a combination thereof may also be referred to as a DN, and particularly, the CS network_A may be referred to a circuit switched network or a CS network.

Also, the core network_A and/or the core network_B and/or the CS network_A and/or one or more apparatuses/functions included in these core networks may be referred to as a core network or core network apparatuses.

That is, an expression that the core network and/or the core network apparatus transmit and/or receive a message and/or performs a procedure may mean that the core network_A and/or the core network_B and/or the CS network_A and/or one or more apparatuses/functions included in these core networks transmit and/or receive a message and/or performs a procedure.

The Evolved Packet System (EPS), which is a 4G system, includes the UE and the access network_A and the core network_A, and may further include the PDN.

The 5GS, which is a 5G system, includes the UE and the access network_B and the access network_A' and the core network_B, and may further include the DN. Moreover, a base station (eNB and/or ng-eNB) in the access network_A' and a base station (gNB) in the access network_B may or may not be connected to each other via, for example, an Xn interface.

The old system 3G includes a Universal Mobile Telecommunications System (UMTS), and includes a UMTS Terrestrial Radio Access Network (UTRAN). The old system 2G includes a global system for mobile communications (GSM (registered trademark)), and includes a GSM (registered trademark) EDGE Radio Access Network (GERAN). Note that radio accesses provided by the old systems of the UMTS and the GSM (registered trademark) may be referred to as the 2G/3G.

The core network_A corresponds to an Evolved Packet Core (EPC). In the EPC, for example, an MME, an SGW, a PGW, a Policy and Charging Rules Function (PCRF), a Home Subscriber Server (HSS), and the like are deployed.

Furthermore, the core network_B corresponds to a 5G Core Network (5GC). In the 5GC, for example, an AMF, a UPF, an SMF, a Policy Control Function (PCF), a Unified Data Management (UDM), and the like are deployed.

The CS network_A 290 is a 2G/3G system network, and may include a 2G/3G system radio access network and/or a 2G/3G core network and/or an apparatus for a voice call service and/or a video call service described below. Note that a connection (access) of the UE to the CS network _A may mean that the UE connects to the circuit switched network (CS network) via the UTRAN.

Here, the UE_A 10 may be an apparatus that can connect to a network service via 3GPP access (also referred to as a 3GPP access network) and/or non-3GPP access (also referred to as a non-3GPP access network). In addition, the UE_A 10 may also include a Universal Integrated Circuit Card (UICC) and an embedded UICC (eUICC). Furthermore, the UE_A 10 may be a wirelessly connectable terminal apparatus and may be Mobile Equipment (ME), a Mobile Station (MS), a Cellular Internet of Things (CIoT) terminal (CIoT UE), or the like.

In addition, the UE_A 10 can be connected to an access network and/or core network. In addition, the UE_A 10 can be connected to the DN_A 5 and/or the PDN_A 6 via the access network and/or the core network. The UE_A 10 transmits and/or receives (communicates) the user data to and/or from the DN_A 5 and/or the PDN_A 6 by using a Protocol Data Unit or Packet Data Unit (PDU) session and/or a Packet Data Network (PDN) connection (PDN connection). Furthermore, the communication of the user data is not limited to Internet Protocol (IP) communication, and may be non-IP communication.

Here, IP communication is data communication using IP, and is data communication achieved by transmitting and/or receiving an IP packet including an IP header. Note that a payload section constituting the IP packet may include the user data transmitted and/or received by the UE_A 10. Furthermore, non-IP communication is data communication without using IP, and is data communication achieved by transmitting and/or receiving data without IP header. For example, non-IP communication may be the data communication achieved by transmitting and/or receiving application data without IP header, or may transmit and/or receive the user data, transmitted and/or received by the UE_A 10, that includes another header such as Media Access Control (MAC) header or Ethernet (registered trademark) frame header.

In addition, a PDU session or a PDN connection is connectivity established between the UE_A 10 and the DN_A 5 and/or the PDN_A 6 to provide a PDU connection service. To be more specific, the PDU session or the PDN connection may be connectivity established between the UE_A 10 and an external gateway. Here, the external gateway may be a User Plane Function (UPF), a Packet Data Network Gateway (PGW), a Service Capability Exposure Function (SCEF), or the like. Furthermore, the PDU session or the PDN connection may be a communication path established to transmit and/or receive the user data between the UE_A 10 and the core network and/or the DN, or a communication path established to transmit and/or receive the PDU. Furthermore, the PDU session or the PDN connection may be a session established between the UE_A 10 and the core network and/or the DN, or may be a logical communication path including a transfer path such as one or more flows or bearers and the like between apparatuses in the mobile communication system 1. To be more specific, the PDU session or the PDN connection may be a connection established between the UE_A 10 and the core network and/or the external gateway, or a connection established between the UE_A 10 and a UPF_A 235 or a PGW_A 30. Note that the PDN connection may be connection and/or a connection between the UE_A 10 and the PGW_A 30 via an evolved NodeB (eNode B, eNB)_A 45 and/or a Serving Gateway (SGW)_A 35, or connectivity and/or a connection between the UE_A 10 and an SCEF via the eNB_A 45 and/or a Mobility Management Entity (MME)_A 40. Furthermore, the PDU session may be connectivity and/or a connection between the UE_A 10 and the UPF_A 235 via a gNB_A 122 or an eNB_B 145. Furthermore, the PDN connection may be identified by a PDN connection ID, and the PDU session may be identified by a PDU session ID. Furthermore, the PDN connection and the PDU session may be identified by an EPS bearer ID. Note that, for simplicity, the PDU session and/or the PDN connection may be referred to as a PDU session.

Note that the UE_A 10 can transmit and/or receive the user data to and/or from an apparatus, such as an application server, that is located in the DN_A 5 and/or the PDN_A 6 by using the PDU session or the PDN connection. In other words, the PDU session or the PDN connection can transfer the user data transmitted and/or received between the UE_A 10 and the apparatus, such as an application server, that is located in the DN_A 5 and/or the PDN_A 6. Furthermore, each apparatus (the UE_A 10, an apparatus in the access network, and/or an apparatus in the core network) may associate one or more pieces of identification information with the PDU session or the PDN connection for management. Note that these pieces of identification information may include at least one of an Access Point Name (APN), a Traffic Flow Template (TFT), a session type, application identification information, identification information of the DN_A 5 and/or the PDN_A 6, Network Slice Instance (NSI) identification information, Dedicated Core Network (DCN) identification information, and access network identification information, or may further include other information. Furthermore, in a case that multiple PDU sessions are established, respective pieces of identification information associated with the PDU sessions or the PDN connections may have the same content or different content. Furthermore, the NSI identification information is information for identifying an NSI, and hereinafter may be an NSI ID or a Slice Instance ID.

In addition, the access network_A and/or the access network_A' and/or the access network_B may be any of an Evolved Universal Terrestrial Radio Access Network (E-UTRAN) A 80, a UTRAN_A 20, a GERAN_A 25, a WLAN ANb 75, a WLAN ANa 70, an NG-RAN_A 120, and a WLAN ANc 125. Note that the E-UTRAN_A 80 and/or the NG-RAN_A 120 and/or the UTRAN_A 20 and/or the GERAN_A 25 may also be referred to as 3GPP access networks, and the WLAN ANb 75 and/or the WLAN Ana 70 and/or the WLAN ANc 125 may be referred to as non-3GPP access networks. Each radio access network includes an apparatus to which the UE_A 10 is actually connected (e.g., a base station apparatus or an access point), and the like. Note that the radio access network and the apparatuses included in the radio access network are herein also collectively referred to as a radio access system.

For example, the E-UTRAN_A 80 is an access network for LTE and includes one or more eNBs_A 45. The eNB_A 45 is a radio base station to which the UE_A 10 connects through Evolved Universal Terrestrial Radio Access (E-UTRA). Furthermore, in a case that multiple eNBs are present in the E-UTRAN_A 80, the multiple eNBs may be connected to each other.

Furthermore, the NG-RAN_A 120 is a 5G access network, and includes one or more gNBs (NR nodeBs)_A 122. The gNB_A 122 is a radio base station to which the UE_A 10 connects through 5G Radio Access. Also, in a case that there are multiple gNBs_A 122 in the NG-RAN_A 120, the respective gNBs_A 122 may connect to one another. Note that the gNB may also be referred to as a New Radio Access Technology node (NR node, NR-node).

Note that the NG-RAN_A 120 may be an access network including the E-UTRA and/or the 5G Radio Access. In other words, the NG-RAN_A 120 may include the eNB_A 45 and/or the gNB_A 122 and/or the eNB_B 145. In this case, the eNB_A 45 and the gNB_A 122 may be similar apparatuses. Therefore, the gNB_A 122 can be substituted with the eNB_A 45 and/or the eNB_B 145.

Note that herein, an eNB connected to the core network_A may be also referred to as the eNB_A, an eNB connected to the core network B may be also referred to as the eNB_B 145 or the Ng-eNB, and a gNB connected to the core network_A may be referred to as an en-gNB. A radio access network including a gNB connected to a 5G network is also referred to as a first radio access system or an access network_A' and a radio access network including an eNB_B connected to a 5G network is also referred to as a second radio access system. Furthermore, an access network_B connected to the core network_B is also referred to as a first access network, an access network_A' connected to the core network_B is also referred to as a second access network, and an access network_A connected to the core network_A is also referred to as a third access network.

Furthermore, a connection form between the access network and the core network described herein may include the access network_B connected to the core network B (NR (New Radio) connected to 5GC and/or the access network_A' connected to the core network_B (E-UTRA connected to 5GC) and/or the access network_A connected to the core network_A (E-UTRA connected to EPC) and/or the CS network (for simplicity, the access network and the core network are represented as one network). Note that the CS network may include a radio access network of the 2G/3G system and/or a core network of the 2G/3G as described above.

An interface for communication between the access network apparatuses may also be provided, and an interface between the access network apparatuses connected to the core network _A may be referred to as an X2 interface and an interface between the access network apparatuses connected to the core network_B may be referred to as an Xn interface. In other words, for example, then Xn interface may be used for communication between multiple gNBs and/or between multiple Ng-eNBs and/or between multiple gNBs and Ng-eNBs connected to the core network_B, and the X2 interface may be used for communication between multiple gNBs and/or between multiple Ng-eNBs and/or between multiple gNBs and Ng-eNBs connected to the core network_A. Here, the communication between the access network apparatuses may be transmission and/or reception of control information, or may be a transfer of user data between the UE_A 10 and the network, without limitation.

Note that, the expression herein "the UE_A 10 is connected to each radio access network" is equivalent to "the UE_A 10 is connected to a base station apparatus, an access point, or the like included in each radio access network," that is, "data, signals, and the like to be transmitted and/or received are also transferred through the base station apparatus and the access point." Note that control messages transmitted and/or received between the UE_A 10 and the core network_B 190 may be the same control message, regardless of a type of the access network. Therefore, the expression "the UE_A 10 and the core network_B 190 transmit and/or receive a message to and/or from each other via the gNB_A 122" may be equivalent to "the UE_A 10 and the core network_B 190 transmit a message to each other via the eNB_A 45 and/or the eNB_B 145."

Furthermore, the access network is a radio network connecting with the UE_A 10 and/or the core network. The access network may be a 3GPP access network, or a non-3GPP access network. Note that the 3GPP access network may be the UTRAN_A 20 and/or the GERAN and/or the E-UTRAN_A 80 and/or the NG-Radio Access Network (RAN)_A 120, and the non-3GPP access network may be the WLAN ANb 75 and/or the WLAN ANa 72 and/or the WLAN ANc 125. Note that the UE_A 10 may connect to the access network or to the core network via the access network in order to connect to the core network.

In addition, the DN_A 5 and/or the PDN_A 6 is a Data Network or a Packet Data Network that provides communication services to the UE_A 10, may be configured as a packet data service network, and may be configured for each service. For example, there may be the DN_A 5 and/or the PDN_A 6 that provides IMS services, and the DN_A 5 and/or the PDN_A 6 may include an apparatus that provides IMS services. In other words, the DN_A 5 and/or the PDN_A 6 may be configured as an IMS_A 7, the DN_A 5 and/or the PDN_A 6 may include the IMS_A 7, and the IMS_A 7 may provide the UE_A 10 with a normal call connection service and/or an emergency call connection service for a voice call service and/or a video call service, and/or a normal call connection service and/or an emergency call connection service for a text message service.

Note that although the following describes only the normal call connection service and/or the emergency call connection service for the voice call service, the normal call connection service and/or the emergency call connection service for the text message service and/or the video call service may be performed as well. Furthermore, the DN_A 5 and/or the PDN_A 6 may include a connected communication terminal. Therefore, connecting to the DN_A 5 and/or the PDN_A 6 may be connecting to a communication terminal or a server apparatus deployed in the DN_A 5 and/or the PDN_A 6. Furthermore, the transmission and/or reception of the user data to and/or from the DN_A 5 and/or the PDN_A 6 may be transmission and/or reception of the user data to and/or from the communication terminal or the server apparatus deployed in the DN_A 5 and/or the PDN_A 6. In addition, although the DN_A 5 and/or the PDN_A 6 is outside the core networks in FIG. 1, they may be within the core networks.

Furthermore, the core network_A 90 and/or the core network_B 190 and/or the CS network_A 290 may be configured as one or more core network apparatuses. Here, the core network apparatuses may be apparatuses that perform part or all of processing or functions of apparatuses included in the core network_A 90 and/or the core network_B 190 and/or the CS network_A 290.

Furthermore, the core network is an IP mobile communication network, operated by a Mobile Network Operator (MNO), that connects to the access network and/or the DN. The core network may be a core network for a mobile communication operator that operates and manages the mobile communication system 1, or may be a core network for a virtual mobile communication operator such as a Mobile Virtual Network Operator (MVNO) and a Mobile Virtual Network Enabler (MVNE), or a virtual mobile communication service provider. Note that the core network_A 90 may be an Evolved Packet Core (EPC) constituting an Evolved Packet System (EPS), and the core network_B 190 may be a 5G Core Network (5GC) constituting a 5GS. Conversely, the EPC may be the core network_A 90, and the 5GC may be the core network_B 190. Furthermore, the core network_B 190 may be a core network for a system providing the 5G communication service. Note that the core network_A 90 and/or the core network_B 190 and/or the CS network_A 290 is not limited to the above, and may be a network for providing a mobile communication service. Hereinafter, the 5GS may also be referred to as a first network system and the EPS may be referred to as a second network system herein. Further, the 5GC may be referred to as a first core network and the EPC may be referred to as a second core network. Furthermore, the aforementioned first and/or second radio access systems, and/or first and/or second network systems are also collectively and simply referred to as networks.

Next, the core networks will be described. In the present embodiment, configuration examples of the core network_A 90 and core network_B 190 will be described. Note that the core networks may be the core network_A 90, the core network_B 190, the CS network_A 290, or a combination thereof.

The core network_A 90 may include at least one of a Home Subscriber Server (HSS)_A 50, an Authentication Authorization Accounting (AAA), a Policy and Charging Rules Function (PCRF), the PGW_A 30, an ePDG, the SGW_A 35, the Mobility Management Entity (MME)_A 40, a Serving GPRS Support Node (SGSN), and an SCEF. Furthermore, these may also be configured as Network Functions (NFs). The NF may be a processing function included in a network. In addition, the core network_A 90 is capable of connecting to multiple radio access networks (the UTRAN_A 20, the GERAN_A 25, the E-UTRAN_A 80, the WLAN ANb 75, and the WLAN ANa 70).

Although only the PGW (PGW_A 30), the SGW (SGW_A 35), and the MME (MME_A 40) among the network elements are described in FIG. 2 for simplicity, it does not mean that no other apparatuses and/or NFs are included therein. Note that the UE_A 10 will also be referred to as a UE, the HSS_A 50 as an HSS, the PGW_A 30 as a PGW, the SGW_A 35 as a SGW, the MME_A 40 as an MME, and the DN_A 5 and/or the PDN_A 6 as a DN for simplicity.

Furthermore, solid lines or dotted lines indicate interfaces between apparatuses in FIG. 2. Here, the solid lines indicate interfaces for U-Plane, and the dotted lines indicate interfaces for C-Plane.

First, a brief description of each apparatus included in the core network_A 90 will be provided.

The PGW_A 30 is a relay apparatus that is connected to the DN, the SGW_A 35, the ePDG, the WLAN ANa 70, the PCRF, and the AAA, and transfers the user data as a gateway between the DN (the DN_A 5 and/or the PDN_A 6) and the core network_A 90. Note that the PGW_A 30 may serve as a gateway for the IP communication and/or non-IP communication. Furthermore, the PGW_A 30 may have a function to transfer the IP communication, or may have a function to perform conversion between the non-IP communication and the IP communication. Note that multiple gateways like this may be deployed in the core network_A 90. Furthermore, the multiple gateways deployed may serve as gateways for connecting the core network_A 90 with a single DN.

Note that a User Plane (U-Plane or UP) may be a communication path for transmitting and/or receiving user data, and may include multiple bearers. Furthermore, a Control Plane (C-Plane or CP) may be a communication path for transmitting and/or receiving a control message, and may include multiple bearers.

Further, the PGW_A 30 may be connected to a User Plane Function (UPF) and a Session Management Function (SMF) or may be connected to the UE_A 10 via the U-Plane. Furthermore, the PGW_A 30 may be configured integrally with the UPF_A 235 and/or the SMF_A 230.

The SGW_A 35 is a relay apparatus that is connected to the PGW_A 30, the MME_A 40, the E-UTRAN_A 80, the SGSN, and the UTRAN_A 20, and transfers the user data as a gateway between the core network_A 90 and the 3GPP access networks (the UTRAN_A 20, the GERAN_A 25, and the E-UTRAN_A 80).

The MME_A 40 is a control apparatus that is connected to the SGW_A 35, the access network, the HSS_A 50, and the SCEF, and performs location information management including mobility management of the UE_A 10 via the access network, and access control. Furthermore, the MME_A 40 may include a function as a session management device to manage a session established by the UE_A 10. Multiple control apparatuses like this may be deployed in the core network_A 90, and, for example, a location management apparatus different from the MME_A 40 may be configured. Like the MME_A 40, the location management apparatus different from the MME_A 40 may be connected to the SGW_A 35, the access network, the SCEF, and the HSS_A 50.

Furthermore, in a case that multiple MMEs are included in the core network A 90, the multiple MMEs may be connected to each other. With this configuration, a context of the UE_A 10 may be transmitted and/or received between the MMEs. In this way, the MME_A 40 is a management apparatus to transmit and/or receive the control information related to the mobility management and the session management to and/or from the UE_A 10. In other words, the MME_A 40 may be a control apparatus for a Control Plane (C-Plane; CP).

The example is described in which the MME_A 40 is configured to be included in the core network_A 90, but the MME_A 40 may be a management apparatus configured in one or multiple core networks, DCNs, or NSIs, or may be a management apparatus connected to one or multiple core networks, DCNs, or NSIs. Here, multiple DCNs or NSIs may be operated by a single network operator, or by different network operators respectively.

The MME_A 40 may be a relay apparatus for transferring the user data as a gateway between the core network_A 90 and the access network. Note that the user data transmitted and/or received by the MME_A 40 serving as a gateway may be small data.

Furthermore, the MME_A 40 may be an NF having a function of the mobility management of the UE_A 10 or the like, or an NF managing one or multiple NSIs. The MME_A 40 may be an NF having one or multiple of these functions. Note that the NF may be one or multiple apparatuses deployed in the core network_A 90, a CP function (hereinafter, also referred to as a Control Plane Function (CPF) or a Control Plane Network Function) for the control information and/or control message, or a common CP function shared between multiple network slices.

Here, the NF is a processing function included in a network. That is, the NF may be a function apparatus such as an MME, an SGW, a PGW, a CPF, an AMF, an SMF, or a UPF, or may be a function such as Mobility Management (MM) and Session Management (SM), or capability information. The NF may be a function device to realize a single function, or a function device to realize multiple functions. For example, an NF to realize the MM function and an NF to realize the SM function may be separately present, or an NF to realize both the MM function and the SM function may be present.

The HSS_A 50 is a managing node that is connected to the MME_A 40, the AAA, and the SCEF, and manages subscriber information. The subscriber information of the HSS_A 50 is referred to during the access control performed by the MME_A 40, for example. Furthermore, the HSS_A 50 may be connected to a location management device different from the MME_A 40. For example, the HSS_A 50 may be connected to the CPF_A 140.

Furthermore, the HSS_A 50, a Unified Data Management (UDM)_A 245 may be configured as different apparatuses and/or NFs or the same apparatus and/or NF.

The AAA is connected to the PGW 30, the HSS_A 50, the PCRF, and the WLAN ANa 70 and performs access control for the UE_A 10 connected via the WLAN ANa 70.

The PCRF is connected to the PGW_A 30, the WLAN ANa 75, the AAA, the DN_A 5 and/or the PDN_A 6 and performs QoS management on data delivery. For example, the PCRF manages QoS of a communication path between the UE_A 10, the DN_A 5, and/or the PDN_A 6. Furthermore, the PCRF may be an apparatus to create and/or manage a Policy and Charging Control (PCC) rule and/or a routing rule used by each apparatus for transmitting and/or receiving user data.

In addition, the PCRF may be a PCF to create and/or manage a policy. More specifically, the PCRF may be connected to the UPF_A 235.

The ePDG is connected to the PGW 30 and the WLAN ANb 75 and delivers user data as a gateway between the core network_A 90 and the WLAN ANb 75.

The SGSN is a control apparatus, connected to the UTRAN_A 20, the GERAN, and the SGW_A 35, for performing location management between a 3G/2G access network (UTRAN/GERAN) and the LTE access network (E-UTRAN). In addition, the SGSN has functions of selecting the PGW and the SGW, managing a time zone of the UE_A 10, and selecting the MME_A 40 at the time of handover to the E-UTRAN.

The SCEF is a relay apparatus that is connected to the DN_A 5 and/or the PDN_A 6, the MME_A 40, and the HSS_A 50 and transfers the user data as a gateway for connecting the DN_A 5 and/or the PDN_A 6 with the core network_A 90. Note that the SCEF may serve as a gateway for non-IP communication. Furthermore, the SCEF may have a function to perform conversion between non-IP communication and IP communication. Multiple gateways like this may be deployed in the core network_A 90. Furthermore, multiple gateways connecting the core network_A 90 with a single DN_A 5 and/or PDN_A 6 and/or DN may be also deployed. Note that the SCEF may be outside or inside the core network.

Next, the core network_B 190 may include at least one of an Authentication Server Function (AUSF), an Access and Mobility Management Function (AMF)_A 240, a Structured Data Storage network function (SDSF), an Unstructured data Storage network function (UDSF), a Network Exposure Function (NEF), an NF Repository Function (NRF), a Policy Control Function (PCF), a Session Management Function (SMF)_A 230, a Session Management Function (SMF)_B 232, a Unified Data Management (UDM)_A 245, a User Plane Function (UPF)_A 235, a User Plane Function (UPF)_B 237, an Application Function (AF), and a Non-3GPP InterWorking Function (N3IWF). Furthermore, these may also be configured as Network Functions (NFs). The NF may be a processing function included in a network. In addition, the core network_B 190 is capable of connecting to multiple radio access networks (the E-UTRAN_A 80, the NG-RAN_A 120, and the WLAN). Such radio access networks may be configured such that multiple different access networks are connected, or any one of the multiple different access networks is connected.

Although only the AMF_A 240, the SMF_A 230, and the UPF_A 235 are illustrated in FIG. 2 among the above elements for simplicity, it does not mean that no other elements (apparatuses and/or NFs) are included therein. Note that the UE_A 10 will also be referred to as UE, the AMF_A 240 as an AMF, the SMF_A 230 as an SMF, the UPF_A 235 as a UPF, and the DN_A 5 and/or the PDN_A 6 as a DN for simplicity.

In addition, FIG. 2 illustrates an N1 interface (hereinafter, also referred to as a reference point), an N2 interface, an N3 interface, an N4 interface, an N6 interface, an N11 interface, and an N26 interface. Here, the N1 interface is an interface between the UE and the AMF, the N2 interface is an interface between the (R) AN (access network) and the AMF, and the N3 interface is an interface between the (R) AN (access network) and the UPF, the N4 interface is an interface between the SMF and the UPF, the N6 interface is an interface between the UPF and the DN, the N11 interface is an interface between the AMF and the SMF, and the N26 interface is an interface between the AMF in the core network_B 190 and the MME in the core network_A 90. These interfaces can be used to perform communication between the apparatuses. Furthermore, the interfaces linking the apparatuses are indicated by solid lines and dotted lines in FIG. 2. Here, the solid lines indicate interfaces for U-Plane, and the dotted lines indicate interfaces for C-Plane.

Next, a brief description of each apparatus included in the core network_B 190 is given.

First, the AMF_A 240 is connected to another AMF, the SMF_A 230, access networks (i.e., the E-UTRAN_A 80, the NG-RAN_A 120, the WLAN ANc 125, the WLAN ANa 70, and the WLAN ANb 75), the UDM_A 245, the AUSF, and the PCF. The AMF_A 240 may play roles of Registration management, Connection management, Reachability management, Mobility management of the UE_A 10 or the like, transfer of a Session Management (SM) message between the UE and the SMF, Access Authentication or Access Authorization, a Security Anchor Function (SEA), Security Context Management (SCM), support for the N2 interface for the N3IWF, support for transmission and/or reception of NAS signals to and/or from the UE via the N3IWF, authentication of the UE connected via the N3IWF, management of Registration Management (RM) states, management of Connection Management (CM) states, and the like. In addition, one or more AMF_A 240s may be deployed within the core network_B 190. In addition, the AMF_A 240 may be an NF that manages one or more Network Slice Instances (NSI). In addition, the AMF_A 240 may also be a Common Control Plane Network Function (Common CPNF, or CCNF) shared among multiple NSIs.

In addition, the RM state is, for example, a non-registered state (RM-DEREGISTERED state) or a registered state (RM-REGISTERED state). In the RM-DEREGISTERED state, the UE is not registered in the network, and thus the AMF is not able to reach the UE because the UE context in the AMF does not have valid location information and routing information for the UE. In the RM-REGISTERED state, the UE is registered in the network, and thus the UE can receive services that requires registration with the network.

In addition, the CM state is, for example, a disconnected state (CM-IDLE state) or a connected state (CM-CONNECTED state). In the CM-IDLE state, the UE is in the RM-REGISTERED state but does not have a NAS signaling connection established between the AMF and the UE via the N1 interface. Also, in the CM-IDLE state, the UE does not have an N2 interface connection (N2 connection) and an N3 interface connection (N3 connection). On the other hand, in the CM-CONNECTED state, the UE has the NAS signaling connection established between the AMF and the UE via the N1 interface. Also, in the CM-CONNECTED state, the UE may have the N2 interface connection (N2 connection) and/or the N3 interface connection (N3 connection).

In addition, the SMF_A 230 is connected to the AMF_A 240, the UPF_A 235, the UDM_A 245, and the PCF. The SMF_A 230 may play roles of Session Management of PDU session, or the like, IP address allocation for the UE, UPF selection and control, UPF configuration for routing traffic to an appropriate destination, a function of reporting arrival of downlink data (Downlink Data Notification), determination of a Session and Service Continuity mode (SSC mode) for a session and an identifier of SM information unique to the AN (for each AN) to be transmitted to the AN via the AMF and the N2 interface, a roaming function, and the like.

In addition, the UPF_A 235 is connected to the DN_A 5, the SMF_A 230, another UPF, and the access networks (i.e. the E-UTRAN_A 80, the NG-RAN_A 120, the WLAN ANc 125, the WLAN ANa 70, and the WLAN ANb 75). The UPF_A 235 may play roles of an anchor to intra-RAT mobility or inter-RAT mobility, packet routing & forwarding, an Uplink Classifier (UL CL) function to support routing of multiple traffic flows for one DN, a Branching point function to support a multi-homed PDU session, QoS processing for a User Plane, verification of uplink traffic, buffering of downlink packets, a function of triggering Downlink Data Notification, and the like. Furthermore, the UPF_A 235 may be a relay apparatus that transfers the user data as a gateway between the DN_A 5 and the core network_B 190. Note that the UPF_A 235 may serve as a gateway for IP communication and/or non-IP communication. Furthermore, the UPF_A 235 may have a function of transferring IP communication or a function to perform conversion between non-IP communication and IP communication. The multiple gateways deployed may serve as gateways for connecting the core network_B 190 with a single DN. Note that the UPF_A 235 may have connectivity with another NF or may be connected to each apparatus via another NF.

In addition, the AUSF is connected to the UDM_A 245 and the AMF_A 240. The AUSF functions as an authentication server.

The SDSF provides a function for the NEF to store or retrieve information as structured data.

The UDSF provides a function for all NFs to store or retrieve information as unstructured data.

The NEF provides a means to securely provide services and capabilities provided by the 3GPP network. The NEF stores information received from another NF as structured data.

In a case that a NF Discovery Request is received from a NF instance, the NRF provides the NF with information of found NF instances or holds information of available NF instances or services supported by the instances.

The PCF is connected to the SMF_A 230, the AF, and the AMF_A 240. The PCF provides a policy rule and the like.

The UDM_A 245 is connected to the AMF_A 240, the SMF_A 230, the AUSF, and the PCF. The UDM_A 245 includes a UDM FE (application front end) and a User Data Repository (UDR). The UDM FE performs processing of authentication information (credentials), location management, subscriber management (subscription management), and the like. The UDR stores data necessary for the UDM FE to provide and the policy profiles necessary for the PCF.

The AF is connected to the PCF. The AF affects traffic routing or is involved in the policy control.

The N3IWF provides functions of establishing an IPsec tunnel with the UE, relaying NAS (N1) signaling between the UE and the AMF, processing N2 signaling transmitted from the SMF and relayed by the AMF, establishing IPsec Security Association (IPsec SA), relaying User Plane packets between the UE and the UPF, selecting the AMF, and the like.

Next, the IMS_A 7 may include at least one of a Proxy Call Session Control Function (Proxy-CSCF or P-CSCF)_A 300, an Interrogating Call Session Control Function (Interrogating-CSCF or I-CSCF), a Serving Call Session Control Function (Serving-CSCF or S-CSCF)_A 320, and a Serving Centralization and Continuity Application Server (SCC AS)_A 340. These may be configured as Network Functions (NFs). The NF may be a processing function included in a network. Here, the Call Session Control Function (CSCF) is a collective name of apparatuses and/or NFs, such as a P-CSCF and/or an S-CSCF and/or an I-CSCF, that play roles of a server and/or a proxy to process signaling packets of Session Initiation Protocol (SIP) in an IP Multimedia Subsystem (IMS).

Although only the P-CSCF _A 300, the S-CSCF_A 320, and the SCC AS_A 340 are described in FIG. 3 for simplicity, it does not mean that no other elements (apparatuses and/or NFs) are included therein. Note that the P-CSCF_A 300 is also referred to as a P-CSCF, the S-CSCF_A 320 as a S-CSCF, and the SCC AS_A 340 as an SCC AS for simplicity.

Next, a brief description of each apparatus included in the IMS_A 7 will be given.

First, the P-CSCF is connected to the core network_A and or the core network_B and/or the UPF and/or the PWG and/or the S-CSCF, and/or the like. The P-CSCF is an SIP proxy server in a case that the UE_A 10 connects to the IMS_A 7. The P-CSCF is an apparatus of the IMS_A 7 to which the UE_A 10 first connects, and allocated to the UE_A 10 in the registration procedure described below. The UE_A 10 may acquire the destination address of the P-CSCF during the procedure. Furthermore, the P-CSCF may perform processing of the normal call connection and processing of the emergency call connection for the voice call service and/or the video call service required by the UE_A 10 with different apparatuses and/or NFs or the same apparatus and/or NF.

In addition, the S-CSCF is also connected to the HSS_A 50 and/or the UDM_A 245 and/or the P-CSCF and/or the I-CSCF and/or the SCC AS, and/or the like. The S-CSCF is an SIP server that performs session control and/or user authentication of the IMS for the UE_A 10.

The SCC AS may also be connected to the S-CSCF and/or the I-CSCF and/or the CS network_A 290. The SCC AS is an Application Server (AS) that provides a switching function between VoLTE and the circuit switched in a Single Radio Voice Call Continuity (SRVCC).

### 2. Configuration of Each Apparatus

The configuration of each apparatus will be described below. Note that some or all of apparatuses to be described below and functions of units of the apparatuses may operate on physical hardware, or logical hardware which is virtually configured on general-purpose hardware.

### 2.1. Configuration of UE

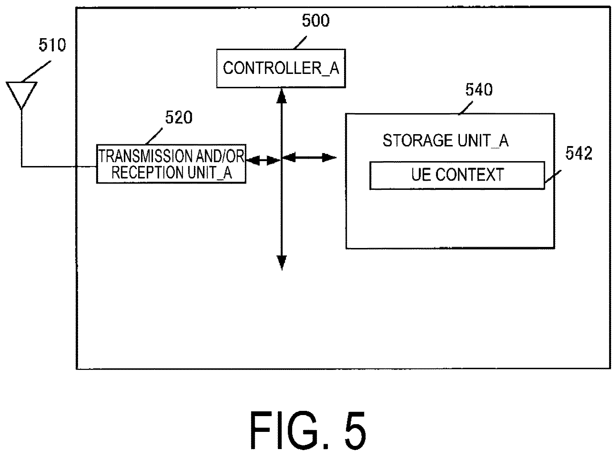

First, an example of an apparatus configuration of the UE_A 10 is illustrated in FIG. 5. As illustrated in FIG. 5, the UE_A 10 includes a controller_A 500, a transmission and/or reception unit_A 520, and a storage unit_A 540. The transmission and/or reception unit_A 520 and the storage unit_A 540 are connected to the controller_A 500 via a bus. Furthermore, an external antenna 510 is connected to the transmission and/or reception unit_A 520. Furthermore, the storage unit_A 540 stores a UE context 442.

The controller_A 500 is a function unit for controlling the entire UE_A 10 and implements various processes of the entire UE_A 10 by reading out and performing various types of information and programs stored in the storage unit_A 540.

The transmission and/or reception unit_A 520 is a function unit through which the UE_A 10 connects to the base station (the E-UTRAN_A 80 and the NG-RAN_A 120) and/or the access point (the WLAN ANc 125) in the access network to connect to the access network. In other words, the UE_A 10 can connect to the base station and/or the access point in the access network via the external antenna 510 connected to the transmission and/or reception unit_A 520. To be specific, the UE_A 10 can transmit and/or receive user data and/or control information to and/or from the base station and/or the access point in the access network via the external antenna 510 connected to the transmission and/or reception unit_A 520.

The storage unit_A 540 is a function unit that stores programs, data, and the like necessary for each operation of the UE_A 10, and include, for example, a semiconductor memory, a Hard Disk Drive (HDD), a Solid State Drive (SSD), or the like. The storage unit_A 540 stores identification information, control information, a flag, a parameter, and the like included in a control message which is transmitted and/or received in the communication procedure described below. Examples of the UE context stored in the storage unit_A 540 may include a UE context used to connect to the access networks_B 120 and a UE context used to connect to the core network_B 190. In addition, examples of the UE context 442 may include a UE context stored for each UE, a UE context stored for each PDU session, and a UE context stored for each bearer. The UE context stored for each UE may include an IMSI, an EMM State, a GUTI, and an ME Identity. Furthermore, the UE context stored for each PDU session may include an APN in Use, an assigned session type, IP address(es), and a default bearer. Furthermore, the UE context stored for each bearer may include an EPS Bearer ID, a TI, and a TFT.

### 2.2. Configuration of Access Network Apparatus

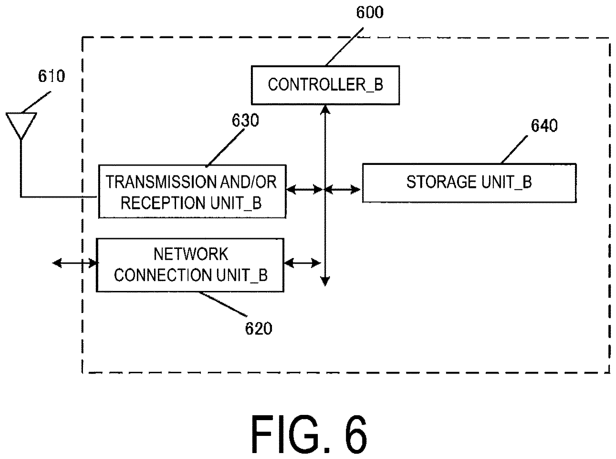

Next, an example configuration of an access network apparatus is illustrated in FIG. 6. The access network apparatus may include, for example and without limitation, the eNB_A 45 and/or the eNB_B and/or the gNB_A 122 and/or the WAG_A 126. As illustrated in FIG. 6, the access network apparatus includes a controller_B 600, a network connection unit_B 620, a transmission and/or reception unit_B 630, and a storage unit_B 640. The network connection unit_B 620, the transmission and/or reception unit_B 630, and the storage unit_B 640 are connected to the controller_B 600 via a bus. Furthermore, an external antenna 610 is connected to the transmission and/or reception unit_B 630.

The controller_B 600 is a function unit for controlling the entire access network apparatus, and implements various processes of all of the eNB_A 45, the gNB_A 122, and the WAG_A 126 by reading out and performing various types of information and programs stored in the storage unit_B 640.

The network connection unit_B 620 is a function unit through which the access network apparatus connects to the AMF_A 240 and the UPF_A 235 in the core network. In other words, the access network apparatus can be connected to the AMF_A 240 and the UPF_A 235 in the core network via the network connection unit_B 620. Specifically, the access network apparatus can transmit and/or receive user data and/or control information to and/or from the AMF_A 240 and/or the UPF_A 235 via the network connection unit_B 620.

The transmission/reception unit_B630 is a function unit through which the access network apparatus connects to the UE_A 10. In other words, the access network apparatus can transmit and/or receive user data and/or control information to and/or from the UE_A 10 via the transmission and/or reception unit_B 630.

The storage unit_B 640 is a function unit configured to store programs, data, and the like necessary for each operation of the access network apparatus. The storage unit_B 640 includes, for example, a semiconductor memory, an HDD, an SSD, or the like. The storage unit_B 640 stores identification information, control information, a flag, a parameter, and the like included in a control message which is transmitted and/or received in the communication procedure described below. The storage unit_B 640 may store these pieces of information as the contexts for each UE_A 10.

### 2.3. Configuration of MME/AMF

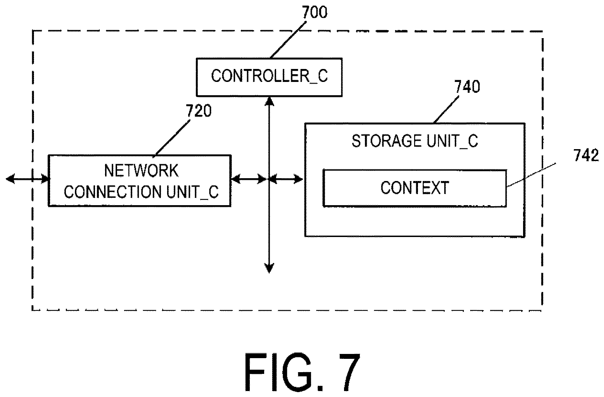

Next, FIG. 7 illustrates an example of an apparatus configuration of the MME_A 40 and/or the AMF_A 240. As illustrated in FIG. 7, the MME_A 40 and/or the AMF_A 240 include a controller_C 700, a network connection unit_C 720, and a storage unit_C 740. The network connection unit_C 720 and the storage unit_C 740 are connected to the controller_C 700 via a bus. Furthermore, the storage unit_C 740 stores a context 742.

The controller_C 700 is a function unit for controlling all of the MME_A 40 and/or the AMF_A 240, and implements various processes of all of the MME_A 40 and/or the AMF_A 240 by reading out and performing various types of information and programs stored in the storage unit_C 740.

The network connection unit_C 720 is a function unit through which the MME_A 40 and/or the AMF_A 240 connect to another AMF_240, SMF_A 230, a base station (the E-UTRAN_A 80 and the NG-RAN_A 120) and/or an access point (the WLAN ANc 125), the UDM_A 245, the AUSF, and the PCF in the access network. In other words, the MME_A 40 and/or the AMF_A 240 can transmit and/or receive user data and/or control information to and/or from the base station and/or access point, the UDM_A 245, the AUSF, and the PCF in the access network via the network connection unit_C 720.

The storage unit_C 740 is a function unit for storing programs, data, and the like necessary for each operation of the MME_A 40 and/or the AMF_A 240. The storage unit_C 740 includes, for example, a semiconductor memory, an HDD, an SSD, or the like. The storage unit_C 740 stores identification information, control information, a flag, a parameter, and the like included in a control message which is transmitted and/or received in the communication procedure described below. Examples of the context 742 stored in the storage unit_C 740 may include a context stored for each UE, a context stored for each PDU session, and a context stored for each bearer. The context stored for each UE may include an IMSI, an MSISDN, an MM State, a GUTI, an ME Identity, a UE Radio Access Capability, a UE Network Capability, an MS Network Capability, an Access Restriction, an MME F-TEID, an SGW F-TEID, an eNB Address, an MME UE S1AP ID, an eNB UE S1AP ID, a gNB Address, a gNB ID, a WAG Address, and a WAG ID. Furthermore, the context stored for each PDU session may include an APN in Use, an Assigned Session Type, IP address(es), a PGW F-TEID, an SCEF ID, and a Default bearer. Furthermore, the context stored for each bearer may include an EPS bearer ID, a TI, a TFT, an SGW F-TEID, a PGW F-TEID, an MME F-TEID, an eNB Address, a gNB Address, a WAG Address, an eNB ID, a gNB ID, and a WAG ID.

### 2.4. Configuration of SMF

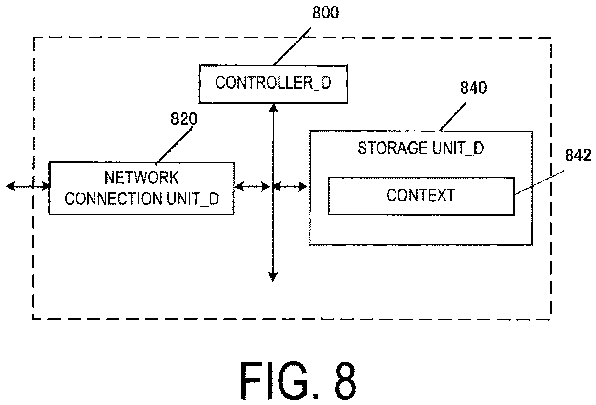

Next, FIG. 8 illustrates an example of an apparatus configuration of the SMF_A 230. As illustrated in FIG. 8, the SMF_A 230 includes a controller_D 800, a network connection unit_D 820, and a storage unit_D 840. The network connection unit_D 820 and the storage unit_D 840 are connected to the controller_D 800 via a bus. In addition, the storage unit_D 840 stores a context 842.

The controller_D 800 of the SMF_A 230 is a function unit for controlling the entire SMF_A 230 and implements various processes of the entire SMF_A 230 by reading out and performing various types of information and programs stored in the storage unit_D 840.

Furthermore, the network connection unit_D 820 of the SMF_A 230 is a function unit through which the SMF_A 230 connects to the AMF_A 240, the UPF_A 235, the UDM_A 245, and the PCF. In other words, the SMF_A 230 can transmit and/or receive user data and/or control information to and/or from the AMF_A 240, the UPF_A 235, the UDM_A 245, and the PCF via the network connection unit_D 820.

Furthermore, the storage unit_D 840 of the SMF_A 230 is a function unit for storing programs, data, and the like necessary for each operation of the SMF_A 230. The storage unit_D 840 of the SMF_A 230 includes, for example, a semiconductor memory, an HDD, an SSD, or the like. The storage unit_D 840 of the SMF_A 230 stores identification information, control information, a flag, a parameter, and the like included in a control message which is transmitted and/or received in the communication procedure described below. In addition, examples of the context 842 stored in the storage unit_D 840 of the SMF_A 230 may include a context stored for each UE, a context stored for each APN, a context stored for each PDU session, and a context stored for each bearer. The context stored for each UE may include an IMSI, an ME Identity, an MSISDN, and a RAT type. The context stored for each APN may include an APN in use. Note that the context stored for each APN may be stored for each Data Network Identifier. The context stored for each PDU session may include Assigned Session Type, IP Address(es), SGW F-TEID, PGW F-TEID, and Default Bearer. The context stored for each bearer may include an EPS bearer ID, a TFT, an SGW F-TEID, and a PGW F-TEID.

### 2.5. Configuration of PGW/UPF

Next, FIG. 8 illustrates an example of an apparatus configuration of the PGW_A 30 and/or the UPF_A 235. As illustrated in FIG. 8, each of the PGW_A 30 and/or the UPF_A 235 includes a controller_D 800, a network connection unit_D 820, and a storage unit_D 840. The network connection unit_D 820 and the storage unit_D 840 are connected to the controller_D 800 via a bus. In addition, the storage unit_D 840 stores a context 842.

The controller_D 800 of the PGW_A 30 and/or the UPF_A 235 is a function unit for controlling the entire UPF_A 235, and implements various processes of all of the PGW_A 30 and/or the UPF_A 235 by reading out and performing various types of information and programs stored in the storage unit_D 840.

Furthermore, the network connection unit_D 820 of the PGW_A 30 and/or the UPF_A 235 is a function unit through which the PGW_A 30 and/or the UPF_A 235 connect to a DN (i.e. the DN_A 5 and/or the PDN_A 6), the SMF_A 230, another PGW_A 30 and/or the UPF_A 235, and an access network (i.e. the E-UTRAN_A 80, the NG-RAN_A 120, the WLAN ANc 125, the WLAN ANa 70, and the WLAN ANb 75). In other words, the UPF_A 235 can transmit and/or receive user data and/or control information to and/or from the DN (i.e., the DN_A 5 and/or the PDN_A 6), the SMF_A 230, the other UPF_A 235, and the access network (i.e. the E-UTRAN A 80, the NG-RAN_A 120, the WLAN ANc 125, the WLAN ANa 70, and the WLAN ANb 75) via the network connection unit_D 820.

Furthermore, the storage unit_D 840 of the PGW_A 30 and/or the UPF_A 235 is a function unit for storing programs, data, and the like necessary for each operation of the PGW_A 30 and/or the UPF_A 235. The storage unit_D 840 of the PGW_A 30 and/or the UPF_A 235 includes, for example, a semiconductor memory, an HDD, an SSD, or the like. The storage unit_D 840 of the PGW_A 30 and/or the UPF_A 235 stores identification information, control information, a flag, a parameter, and the like included in a control message which is transmitted and/or received in the communication procedure described below. In addition, examples of the context 842 stored in the storage unit_D 840 of the PGW_A 30 and/or the UPF_A 235 may include a context stored for each UE, a context stored for each APN, a context stored for each PDU session, and a context stored for each bearer. The context stored for each UE may include an IMSI, an ME Identity, an MSISDN, and a RAT type. The context stored for each APN may include an APN in use. Note that the context stored for each APN may be stored for each Data Network Identifier. The context stored for each PDU session may include Assigned Session Type, IP Address(es), SGW F-TEID, PGW F-TEID, and Default Bearer. The context stored for each bearer may include an EPS bearer ID, a TFT, an SGW F-TEID, and a PGW F-TEID.

### 2.6. Configuration of CSCF

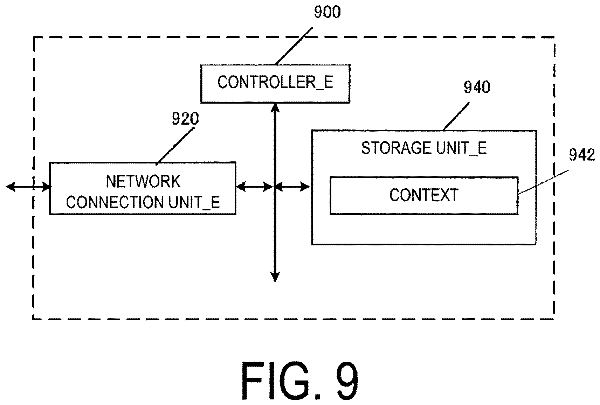

Next, FIG. 9 illustrates an example of a configuration of the CSCF. As illustrated in FIG. 9, the CSCF includes a controller_E 900, a network connection unit_E 920, and a storage unit_E 940. The network connection unit_E 920 and the storage unit_E 940 are connected to the controller_E 900 via a bus. In addition, the storage unit_E 940 stores a context 942.

The controller_E 900 of the CSCF is a function unit for controlling the entire CSCF and implements various processes of the entire CSCF by reading out and performing various types of information and programs stored in the storage unit_E 940.

Furthermore, the network connection unit_E 920 of the CSCF is a function unit through which the CSCF connects to another CSCF, the UPF_A 235, the PGW_A 30, the HSS_A 50, and the UDM_A 245. In other words, the CSCF can transmit and/or receive user data and/or control information to and/or from the other CSCF, the UPF_A 235, the PGW_A 30, the HSS_A 50, and the UDM_A 245 via the network connection unit_E 920.

In addition, the storage unit_E 940 of the CSCF is a function unit for storing programs, data, and the like necessary for each operation of the CSCF. The storage unit_E 940 includes, for example, a semiconductor memory, an HDD, an SSD, or the like. The storage unit_E 940 stores identification information, control information, a flag, a parameter, and the like included in a control message which is transmitted and/or received in the communication procedure described below. The context 942 stored in the storage unit_E 940 may include a context stored for each UE, an IMSI, an MSISDN, a UE Address, Public User ID(s), Private User ID(s), an access network type, and a session status (session state information).

### 2.7. Information Stored in Storage Unit of Each Apparatus

Next, each piece of information stored in the storage unit of each of the above-described apparatuses will be described.

The International Mobile Subscriber Identity (IMSI) and/or a Subscriber Permanent Identifier (SUPI) are permanent identification information of a subscriber (user) and is identification information assigned to a user using the UE. The IMSI and/or the SUPI stored by the UE_A 10, the MME_A 40/CPF_A 140/AMF_A 2400, and the SGW_A 35 may be the same as the IMSI and/or the SUPI stored by the HSS_A 50 and/or the UDM_A 245. Here, the SUPI may include the IMSI.

The EMM State/MM State indicates a Mobility management state of the UE_A 10 or the MME_A 40/CPF_A 140/AMF_A 240. For example, the EMM State/MM State may be an EMM-REGISTERED state (registered state) in which the UE_A 10 is registered in the network, and/or an EMM-DEREGISTERD state (deregistered state) in which the UE_A 10 is not registered in the network. The EMM State/MM State may be an ECM-CONNECTED state in which a connection is maintained between the UE_A 10 and the core network, and/or an ECM-IDLE state in which the connection is released. Note that the EMM State/MM State may be information for distinguishing a state in which the UE_A 10 is registered in the EPC from a state in which the UE_A 10 is registered in the NGC or 5GC.

The Globally Unique Temporary Identity (GUTI) is temporary identification information of the UE_A 10. The GUTI includes identification information (Globally Unique MME Identifier (GUMMEI)) of the MME_A 40/CPF_A 140/AMF_A 240 and identification information (M-Temporary Mobile Subscriber Identity (M-TMSI)) of the UE_A 10 in a specific MME_A 40/CPF_A 140/AMF_A 240. The ME Identity is an ID of the UE_A 10 or the ME, and may be International Mobile Equipment Identity (IMEI) or IMEI Software Version (IMEISV), for example. The MSISDN represents a basic phone number of the UE_A 10. The MSISDN stored by the MME_A 40/CPF_A 140/AMF_A 240 may be information indicated by the storage unit of the HSS_A 50. Note that the GUTI may include information for identifying the CPF_140.

The MME F-TEID is information for identifying the MME_A 40/CPF_A 140/AMF_A 240. The MME F-TEID may include an IP address of the MME_A 40/CPF_A 140/AMF_A 240, a Tunnel Endpoint Identifier (TEID) of the MME_A 40/CPF_A 140/AMF_A 240, or both of them. Furthermore, the IP address of the MME _A 40/CPF_A 140/AMF_A 240 and the TEID of the MME_A 40/CPF_A 140/AMF_A 240 may be stored independently of each other. The MME F-TEID may be identification information for user data, or identification information for control information.

The SGW F-TEID is information for identifying the SGW_A 35. The SGW F-TEID may include an IP address of the SGW_A 35, a TEID of the SGW_A 35, or both of them. The IP address of the SGW_A 35 and the TEID of the SGW_A 35 may be stored independently of each other. The SGW F-TEID may be identification information for user data, or identification information for control information.

The PGW F-TEID is information for identifying the PGW_A 30/UPGW_A 130/SMF_A 230/LTPF_A 235. The PGW F-TEID may include an IP address of the PGW_A 30/UPGW A 130/SMF A 230/LTPF A 235, a TEID of the PGW_A 30/UPGW A 130/SMF A 230/LTPF_A 235, or both of them. In addition, the IP address of the PGW_A 30/UPGW_A 130/SMF_A 230/UPF_A 235 and the TEID of the PGW_A 30/UPGW_A 130/SMF_A 230/UPF_A 235 may be stored independently of each other. The PGW F-TEID may be identification information for user data, or identification information for control information.

The eNB F-TEID is information for identifying the eNB_A 45. The eNB F-TEID may include an IP address of the eNB_A 45, a TEID of the eNB_A 45, or both of them. The IP address of the eNB_A 45 and the TEID of the SGW_A 35 may be stored independently of each other. The eNB F-TEID may be identification information for user data, or identification information for control information.

The APN may be identification information for identifying the core network and an external network such as the DN. Furthermore, the APN can also be used as information for selecting a gateway such as the PGW_A 30/UPGW_A 130/UPF_A 235 for connecting the core network_A 90. Note that the APN may be a Data Network Name (DNN). Therefore, the APN may be represented by a DNN, or the DNN may be represented by the APN.

Note that the APN may be identification information for identifying such a gateway, or identification information for identifying an external network such as the DN. Note that, in a case that multiple gateways connecting the core network and the DN are deployed, there may be multiple gateways that can be selected according to the APN. Furthermore, one gateway may be selected among such multiple gateways by another method using identification information other than the APN.

The UE Radio Access Capability is identification information indicating a radio access capability of the UE_A 10. The UE Network Capability includes an algorithm of security supported by the UE_A 10 and a key derivation function. The MS Network Capability is information including one or more pieces of information necessary for the SGSN with respect to the UE_A 10 having a function of the GERAN_A 25 and/or the UTRAN_A 20. The Access Restriction is registration information for access restriction. The eNB Address is an IP address of the eNB_A 45. The MME UE S1AP ID is information for identifying the UE_A 10 in the MME_A 40/CPF_A 140/AMF_A 240. The eNB UE S1AP ID is information for identifying the UE_A 10 in the eNB_A 45.

The APN in Use is an APN recently used. The APN in Use may be Data Network Identifier. This APN may include identification information of the network and identification information of a default operator. Furthermore, the APN in Use may be information for identifying a DN with which the PDU session is established.

The Assigned Session Type is information indicating a PDU session type. The Assigned Session Type may be Assigned PDN Type. The PDU session type may be IP, or non-IP. Furthermore, in a case that the PDU session type is IP, information indicating a PDN type assigned by the network may be further included. Note that the Assigned Session Type may be IPv4, IPv6, or IPv4v6.

Unless otherwise specifically described, the IP Address refers to the IP address assigned to the UE. The IP address may be an IPv4 address, an IPv6 address, or an IPv6 prefix. Note that in a case that the Assigned Session Type indicates non-IP, an element of the IP Address may not be included.

The DN ID is identification information for identifying the core network_B 190 and an external network such as the DN. Furthermore, the DN ID can also be used as information for selecting a gateway such as the UPGW_A 130 or the PF_A 235 connecting the core network_B 190.

Note that the DN ID may be identification information for identifying such a gateway, or identification information for identifying an external network such as the DN. Note that, in a case that multiple gateways connecting the core network_B 190 and the DN are deployed, there may be multiple gateways that can be selected according to the DN ID. Furthermore, one gateway may be selected among such multiple gateways by another method using identification information other than the DN ID.

Furthermore, the DN ID may be information equivalent to the APN, or different from the APN. Note that in a case that the DN ID is the information different from the APN, each apparatus may manage information indicating correspondence between the DN ID and the APN, perform a procedure to inquire the APN by using the DN ID, or perform a procedure to inquire the DN ID by using the APN.

The SCEF ID is an IP address of the SCEF used in the PDU session. The Default Bearer is information acquired and/or created in a case that a PDU session is established and is EPS bearer identification information for identifying a default bearer associated with the PDU session.

The EPS Bearer ID is identification information of the EPS bearer. The EPS Bearer ID may be identification information for identifying Signalling Radio Bearer (SRB) and/or Control-plane Radio Bearer (CRB), or identification information for identifying Data Radio Bearer (DRB). The Transaction Identifier (TI) is identification information for identifying a bidirectional message flow (Transaction). Note that the EPS Bearer ID may be EPS bearer identification information for identifying a dedicated bearer. Therefore, the EPS bearer ID may be identification information for identifying the EPS bearer different from the default bearer. The TFT indicates all packet filters associated with the EPS bearer. The TFT is information for identifying some pieces of user data to be transmitted and/or received, and thus, the UE_A 10 uses the EPS bearer associated with the TFT to transmit and/or receive the user data identified by the TFT. In still other words, the UE_A 10 uses a Radio Bearer (RB) associated with the TFT to transmit and/or receive the user data identified by the TFT. The TFT may associate the user data such as application data to be transmitted and/or received with an appropriate transfer path, and may be identification information for identifying the application data. The UE_A 10 may use the default bearer to transmit and/or receive the user data which cannot be identified by the TFT. The UE_A 10 may store in advance the TFT associated with the default bearer.

The Default Bearer is EPS bearer identification information for identifying a default bearer associated with PDN connection/PDU session. Note that the EPS bearer may be a logical communication path established between the UE_A 10 and the PGW_A 30/UPGW_A 130/UPF_A 235, or a communication path constituting the PDN connection/PDU session. Furthermore, the EPS bearer may be a default bearer, or a dedicated bearer. Furthermore, the EPS bearer may include an RB established between the UE_A 10 and the base station and/or the access point in the access network. Furthermore, the RB and the EPS bearer may be associated with each other on a one-to-one basis. Therefore, identification information of the RB may be associated with the identification information of the EPS bearer on a one-to-one basis, or may be the same identification information as the identification information of the EPS bearer. Note that the RB may be an SRB and/or a CRB, or a DRB. Furthermore, the Default Bearer may be information that the UE_A 10 and/or the SGW_A 35 and/or the PGW_A 30/UPGW_A 130/SMF_A 230/UPF_A 235 acquire from the core network in a case that the PDU session is established. Note that the default bearer is an EPS bearer first established during the PDN connection/PDU session, and is such an EPS bearer that only one bearer can be established during one PDN connection/PDU session. The default bearer may be an EPS bearer that can be used for communication of user data not associated with the TFT. The dedicated bearer is an EPS bearer established after the default bearer is established during the PDN connection/PDU session, and is such an EPS bearer that multiple bearers can be established during one PDN connection/PDU session. The dedicated bearer is an EPS bearer that can be used for communication of user data not associated with the TFT.

User Identity is information for identifying a subscriber. The User Identity may be an IMSI, or an MSISDN. Furthermore, the User Identity may also be identification information other than the IMSI or the MSISDN. Serving Node Information is information for identifying the MME_A 40/CPF_A 140/AMF_A 240 used in a PDU session, and may be an IP address of the MME_A 40/CPF_A 140/AMF_A 240.

The eNB Address is an IP address of the eNB_A 45. The eNB ID is information for identifying the UE in the eNB_A 45. MME Address is an IP address of the MME _A 40/CPF_A 140/AMF_A 240. MME ID is information for identifying the MME_A 40/CPF_A 140/AMF_A 240. The gNB Address is an IP address of the gNB_A 122. The gNB ID is information for identifying the gNB_A 122. The WAG Address is an IP address of the WAG_A 126. The WAG ID is information for identifying the WAG_A 126.

### 3. Description of Terms and Identification Information and Procedures Used in Each Embodiment

Terms and identification information and procedures at least one of which is used in each embodiment will be described in advance.

### 3.1. Description of Terms and Identification Information in Various Procedures in Each Embodiment

Next, before detailed processes of various procedures in respective embodiments according to the present embodiment are described, terminology specific to the present embodiment and primary identification information used in each procedure will be described beforehand in order to avoid overlapping descriptions.

The Single Radio Voice Call Continuity (SRVCC) is a technique for anchoring the IMS to continue a voice call between the IMS via a PS access and a Circuit Switched (CS) access in a case that the UE is capable of transmitting and/or receiving data on one access within multiple accesses at a given time. In other words, the SRVCC may be a technique for the UE to switch an access to be used and continue a voice call between the Voice over LTE (VoLTE) and the circuit switched.

A Single Radio Video Call Continuity (vSRVCC) is a technique for anchoring the IMS to continue a video call from the E-UTRAN or the NG-RAN to the UTRAN in a case that the UE is capable of transmitting and/or receiving data on one access within multiple accesses, in a case that the UE is capable of transmitting and/or receiving data on one access within multiple accesses at a given time. In other words, the vSRVCC may be a technique for the UE to switch an access to be used and continue a video call between the Voice over LTE (VoLTE) and the circuit switched. Note that the vSRVCC may be the term introduced to be distinguished from the SRVCC. For example, the UTRAN may be a UTRAN-CS.

The Video Call is a technique for providing a session with a two-way voice call and a synchronized real-time video for the IMS via the E-UTRAN or the NG-RAN. In addition, the video call is a technique for providing a CS multimedia call toward the UTRAN.

The 3GPP SRVCC UE is a UE in which IMS service continuity is extended by UE capability information, to which added are capability information of the SRVCC between the E-UTRAN and the UTRAN or capability information of the SRVCC between the E-UTRAN and the GERAN or capability information of the SRVCC between the UTRAN (HSPA) and the UTRAN and the GERAN or capability information of the SRVCC between the NG-RAN and the UTRAN. Note that the UTRAN may be represented as the 3GPP UTRAN, and the GERAN may be represented as the 3GPP UTRAN.

The Service Centralization and Continuity Application Server (SCC AS) is an Application Server (AS) that provides a switching function between the VoLTE and the circuit switched in the SRVCC.

A mobile station classmark 2 (Mobile Station Classmark 2) is an information element provided to a network and including information regarding priority (including both high priority and low priority) of the mobile terminal apparatus (UE). The mobile station classmark 2 may be information that affects the handling of the mobile terminal apparatus in the network.

Furthermore, the mobile station classmark 2 may be information indicating a characteristic of a common mobile terminal apparatus. Accordingly, the mobile station classmark 2 may be information independent of the frequency band of the channel to be transmitted, except for explicitly indicated field.

A mobile station Classmark 3 (Mobile Station Classmark 3) is an information element provided to a network and including information related to a mobile terminal apparatus (UE). Content of the mobile station classmark 3 may be information that affects the handling of the mobile terminal apparatus in the network.

Furthermore, the mobile station classmark 3 may be information indicating a characteristic of a common mobile terminal apparatus. Accordingly, the mobile station classmark 3 may be information independent of the frequency band of the channel to be transmitted, except for explicitly indicated field.

Supported codecs are one or multiple supported audio codecs in the CS voice call.

A first state is a state in which the UE_A 10 and each apparatus have completed the registration procedure, and the UE_A 10 is registered with the core network B (a RM-REGISTERED state and/or a 5GMM-REGISTERED state). Furthermore, the first state may be a state in which the AMF stores context information for the UE and the UE_A 10 stores context information of the network acquired during the registration procedure.

A second state is a state in which the UE_A has completed a PDU connection establishment procedure with the IMS via the core network_B. In other words, the UE_A in the second state may be in a state of establishing a PDU session for a voice service or a video service provided by the IMS. The UE_A in the second state may be in a CM-CONNECTED state, or in a state in which the UE and each apparatus have completed an IMS registration procedure.

A tracking area is one or multiple ranges which the core network manages and which can be represented by the location information of the UE_A 10. The tracking area may include multiple cells. Furthermore, the tracking area may be a range in which a control message such as paging is broadcast, or a range in which the UE_A 10 can move without a handover procedure. Furthermore, the tracking area may be a routing area, a location area, or those similar to them. The tracking area hereinafter may be Tracking Area (TA).

A TA list is a list including one or multiple TAs assigned to the UE_A 10 by the network. Note that while the UE_A 10 is moving within one or multiple TAs included in the TA list, the UE_A 10 may be able to move without performing a tracking area update procedure. In other words, for the UE_A 10, the TA list may be an information group indicating an area in which the UE_A 10 can move without performing the tracking area update procedure.

The Subscriber Permanent Identifier (SUPI) is identification information assigned to a subscriber. The SUPI may be an International Mobile Subscriber Identity (IMSI) or a Network Access Identifier (NAI).

The Data Network Name (DNN) is information identifying the Data Network (DN). The DNN may be an Access Point Name (APN).

An N1 Mode is a UE mode in which the UE can access the 5GC via the 5G access network. The N1 mode may be a UE mode capable of transmitting and/or receiving messages using an N1 interface. Note that the N1 interface may include an Xn interface that connects between the N1 interface and the radio base station.

The UE in the N1 mode can, for example, access the 5GC via the ng-eNB providing an E-UTRA function and access the 5GC via the gNB providing a NR function.

Note that the access to the 5GC via the ng-eNB providing the E-UTRA function and the access to the 5GC via the gNB providing the NR function are in the N1 mode, but may be configured as separate modes different from each other.

An Iu mode is a UE mode in which the UE can access the CS network_A.

Note that, as a representation used in the description in the present embodiment, a description of transmission to the IMS may mean transmitting a message to the P-CSCF and/or the S-CSCF performing an IMS call control function, and/or the SCC-AS that is an application server providing a function to switch between the VoLTE and the circuit switched in the SRVCC.

Furthermore, as a representation used in the description in the present embodiment, a description of reception from the IMS may mean receiving a message from the P-CSCF and/or the S-CSCF performing an IMS call control function, and/or the SCC-AS that is an application server providing a function to switch between the VoLTE and the circuit switched in the SRVCC.

Note that, as used in the description in the present embodiment, the SRVCC from the NG-RAN to the UTRAN and the SRVCC from the N1 mode to the Iu mode represent the same meaning, and both descriptions in the present embodiment may be interpreted as each other.

Furthermore, as used in the description in the present embodiment, the vSRVCC from the NG-RAN to the UTRAN and the vSRVCC from the N1 mode to the Iu mode represent the same meaning, and both descriptions in the present embodiment may be interpreted as each other.

Next, the identification information in the present embodiment will be described.

First identification information in the present embodiment is the UE capability information indicating support of the SRVCC from the UTRAN High Speed Packet Access (HSPA) or the E-UTRAN or the NG-RAN to the GERAN or UTRAN (GERAN/UTRAN).

Note that in a case that the UE_A 10 supports a function of the SRVCC to the GERAN/UTRAN, and/or in a case that the UE_A 10 supports a function of the SRVCC from the NG-RAN to the UTRAN, the UE_A 10 may transmit this identification information set in a SRVCC to GERAN/UTRAN capability information (SRVCC capability bit to the GERAN/UTRAN). Furthermore, the UE_A may transmit the SRVCC to GERAN/UTRAN capability information included in a Mobile Station (MS) network capability information element.

Second identification information in the present embodiment is the UE capability information indicating support of the SRVCC from the NG-RAN to the UTRAN.

Note that in a case that the UE_A 10 supports the function of the SRVCC from the NG-RAN to the UTRAN, the UE_A 10 may transmit this identification information set in the SRVCC to GERAN/UTRAN capability information (SRVCC capability bit to the GERAN/UTRAN). Furthermore, the UE_A may transmit the SRVCC to GERAN/UTRAN capability information included in the Mobile Station (MS) network capability information element.

Alternatively, in the case that the UE_A 10 supports the function of the SRVCC from the NG-RAN to the UTRAN, the UE_A 10 may transmit this identification information set in a SRVCC from NG-RAN to UTRAN capability bit (SRVCC capability information from the NG-RAN to the UTRAN). Furthermore, the UE_A may transmit the SRVCC from NG-RAN to UTRAN capability bit included in the Mobile Station (MS) network capability information element.

Third identification information in the present embodiment is the UE capability information indicating that H.245 is supported, a predefined code can be used, and H.245 codec negotiation can be performed as needed after a SRVCC handover.

Note that in a case that the UE_A supports the vSRVCC from a S 1 mode to the Iu mode and/or supports the vSRVCC from the N1 mode to the Iu mode, the UE_A may set this identification information in information indicating capability of performing H.245 after a handover (a H.245 after handover bit). Furthermore, the UE_A may transmit the information indicating capability of performing H.245 after a handover included in a UE network capability information element.

In this case, the UE_A may transmit the first identification information or the second identification information in addition to this identification information.

Note that the UE_A may transmit the first identification information set in the SRVCC to GERAN/UTRAN capability information (SRVCC capability bit to the GERAN/UTRAN). Furthermore, the UE_A may transmit the SRVCC to GERAN/UTRAN capability information included in the Mobile Station (MS) network capability information element.

Furthermore, the UE_A may transmit the second identification information set in the SRVCC to GERAN/UTRAN capability information (SRVCC capability bit to the GERAN/UTRAN). Furthermore, the UE_A may transmit the SRVCC to GERAN/UTRAN capability information included in the Mobile Station (MS) network capability information element.

Alternatively, the UE_A may transmit the second identification information set in the SRVCC from NG-RAN to UTRAN capability bit (SRVCC capability information from the NG-RAN to the UTRAN). Furthermore, the UE_A may transmit the SRVCC from NG-RAN to UTRAN capability bit included in the Mobile Station (MS) network capability information element.

Fourth identification information in the present embodiment is the UE capability information indicating that H.245 is supported, a predefined code can be used, and H.245 codec negotiation can be performed as needed after a SRVCC handover from the NG-RAN to the UTRAN.

Note that in these that the UE_A supports the vSRVCC from the N1 mode to the Iu mode, the UE_A may set this identification information in the information indicating capability of performing H.245 after a handover (the H.245 after handover bit). Furthermore, the UE_A may transmit the information indicating capability of performing H.245 after a handover included in the UE network capability information element. In this case, the UE_A may transmit the first identification information or the second identification information in addition to this identification information.

Note that the UE_A may transmit the first identification information set in the SRVCC to GERAN/UTRAN capability information (SRVCC capability bit to the GERAN/UTRAN). Furthermore, the UE_A may transmit the SRVCC to GERAN/UTRAN capability information included in the Mobile Station (MS) network capability information element.

Furthermore, the UE_A may transmit the second identification information set in the SRVCC to GERAN/UTRAN capability information (SRVCC capability bit to the GERAN/UTRAN). Furthermore, the UE_A may transmit the SRVCC to GERAN/UTRAN capability information included in the Mobile Station (MS) network capability information element.

Alternatively, the UE_A may transmit the second identification information set in the SRVCC from NG-RAN to UTRAN capability bit (SRVCC capability information from the NG-RAN to the UTRAN). Furthermore, the UE_A may transmit the SRVCC from NG-RAN to UTRAN capability bit included in the Mobile Station (MS) network capability information element.

Fifth identification information may be information indicating the (Mobile Station Classmark 2).

Further, the fifth identification information may be information transmitted in a case that the UE supports a SRVCC handover to the UTRAN or the GERAN and/or in case that the UE supports a vSRVCC handover to the UTRAN or the GERAN. In other words, the network may recognize the UE support of the handover to the UTRAN based on the fifth information.

Sixth identification information may be information indicating codecs the UE supports in a CS voice call (Supported codecs).

Seventh identification information is information indicating that the SRVCC handover is canceled and/or information indicating that reestablishment of an IMS session is required.

More specifically, the seventh information is information indicating that the SRVCC handover from the NG-RAN to the UTRAN is canceled, and/or information indicating that reestablishment of the IMS session via the NG-RAN is required.

### 3.2. Description of Procedures Used in Each Embodiment

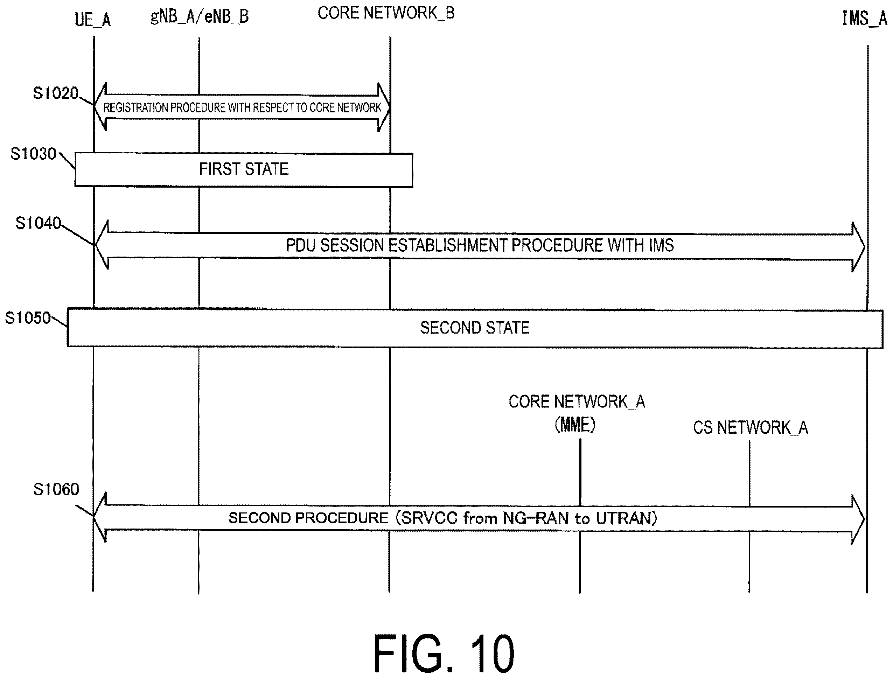

Next, various procedures according to the respective embodiments will be described with reference to FIG. 10. Hereinafter, the various procedures in respective embodiments are also referred to as the present procedure, and the present procedure includes a Registration procedure (S1020) with respect to the core network, a PDU session establishment procedure with the IMS (S1040), and the second procedure (S1060).

Specifically, first in the present procedure, the UE_A 10 initiates the registration procedure S1020 with respect to the core network (S1020). The UE_A 10 and each apparatus exchange the capability information of the UE_A 10 and the core network and/or the access network by performing the registration procedure with respect to the core network. In addition, the UE_A 10 and/or each apparatus transition to the first state, based on completion of the registration procedure with respect to the core network (S1030). Here, the UE_A 10 and each apparatus may transition to a state where the UE_A 10 is registered with the network (RM-REGISTERED state) by performing the registration procedure with respect to the core network.

Next, the UE_A 10 in the first state initiates the PDU session establishment procedure with the IMS (S1040). The UE_A 10 and each apparatus in the first state establish a PDU session between the UE_A 10 and the IMS by performing the PDU session establishment procedure with the IMS. Furthermore, the UE_A 10 and each apparatus transition to the second state, based on completion of the PDU session establishment procedure with the IMS (S1050). Note that the PDU session established between the UE_A 10 and the IMS may be a PDU session established via the access network and the core network.

Next, the UE_A 10 and each apparatus in the second state perform the second procedure. The UE_A 10 and each apparatus in the second state handover from the NG-RAN_A 120 to the UTRAN_A 20 using the SRVCC function by performing the second procedure.

The present procedure is completed by the above procedure. Note that the UE_A 10 and each apparatus may exchange and/or acquire various pieces of capability information and/or various pieces of request information of each apparatus in the registration procedure with respect to the core network.

Furthermore, each apparatus involved in the present procedure may transmit and/or receive each control message described in the present procedure to transmit and/or receive one or more pieces of identification information included in each control message and store each piece of identification information transmitted and/or received as a context.

### 3.3. Example of Registration Procedure with respect to Core Network

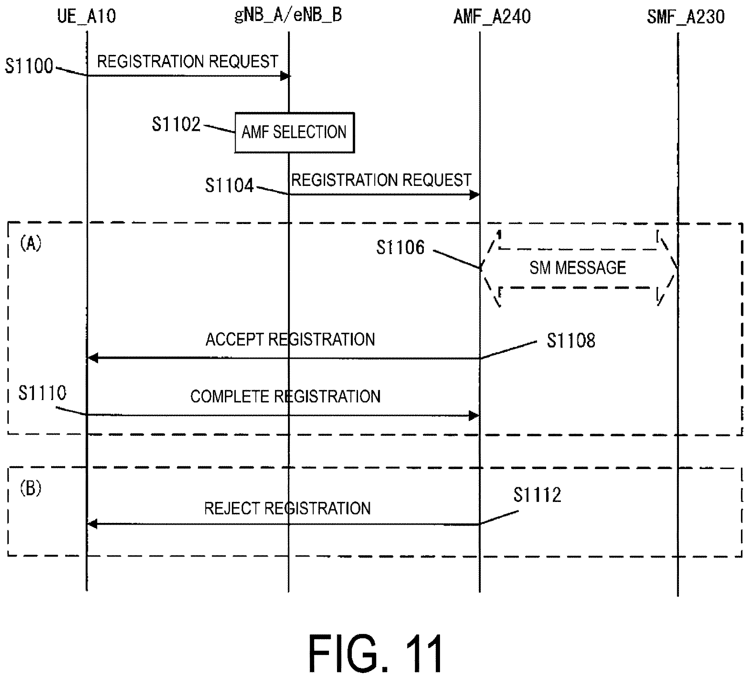

Next, the registration procedure with respect to the core network will be described with reference to FIG. 10 and FIG. 11. Hereinafter, the registration establishment procedure is also referred to as the present procedure. Note that the present procedure is a procedure corresponding to the registration procedure (S1020) with respect to the core network in FIG. 10 described above.

The present procedure is a procedure initiated by the UE_A 10 to perform registration with a network (the access network and/or the core network_B 190 and/or the DN (DN_A 5 and/or PDN_A 6)). In a state in which the UE_A 10 is not registered in the network, the UE_A 10 can perform the present procedure at any timing such as the timing of turning on power. In other words, the UE_A 10 may initiate the present procedure at any timing in a non-registered state (RM-DEREGISTERED state). In addition, each apparatus may transition to a registered state (RM-REGISTERED state), based on the completion of the registration procedure.

Furthermore, the present procedure may be a procedure for updating location registration information of the UE_A 10 in the network, for regularly notifying the network of a state of the UE_A 10 from the UE_A 10, and/or for updating particular parameters related to the UE_A 10 in the network.

The UE_A 10 may initiate the present procedure in a case that the UE_A 10 applies mobility across TAs. In other words, the UE_A 10 may initiate the present procedure in a case that the UE_A 10 moves to a TA different from a TA indicated in a TA list that the UE_A 10 holds. Furthermore, the UE_A 10 may initiate the present procedure in a case that a running timer expires. Furthermore, the UE_A 10 may initiate the present procedure in a case that a context of each apparatus needs to be updated due to disconnection or deactivation of a PDU session. Furthermore, the UE_A 10 may initiate the present procedure in a case that a change occurs in capability information and/or preference concerning PDU session establishment of the UE_A 10. Furthermore, the UE_A 10 may initiate the present procedure regularly. Note that, besides the above, the UE_A 10 can perform the present procedure at any timing as long as a PDU session is established.

Further, after the completion of the registration procedure with respect to the core network, each apparatus may transition to the first state, and each apparatus in the first state may perform the subsequent processing and procedures in FIG. 10 described above.

Each step of the present procedure will be described below. First, the UE_A 10 transmits a Registration Request message to the AMF_A 240 via the gNB_A 122 or the eNB_B 145 (S 1100, S1102, and S 1104) to initiate the registration procedure. In addition, the UE_A 10 may transmit a Session Management (SM) message (e.g., a PDU session establishment request message) included in the registration request message, or transmit the SM message (e.g., the PDU session establishment request message) along with the registration request message to initiate a procedure for SM, such as a PDU session establishment procedure, during the registration procedure.

Specifically, the UE A10 transmits an RRC message including the registration request message to the gNB_A 122 or the eNB_B 145 (S1100). In case of receiving the RRC message including the registration request message, the gNB_A 122 or the eNB_B 145 selects the AMF_A 240 as a NF or a common CP function to which the registration request message is routed (S 1 102). The gNB_A 122 or the eNB_B 145 retrieves the registration request message from the received RRC message and transmits or transfers the registration request message to the selected AMF_A 240 (S 1 104). Here, the gNB_A 122 or the eNB_B 145 may select the AMF_A 240 based on information included in the RRC message. Furthermore, the registration request message may be a Non-Access-Stratum (NAS) message transmitted and/or received on the N1 interface. In addition, the RRC message may be a control message transmitted and/or received between the UE_A 10 and the gNB_A 122 or the eNB_B 145. Furthermore, the NAS message may be processed in a NAS layer, the RRC message may be processed in an RRC layer, and the NAS layer may be a higher layer than the RRC layer.

In addition, in a case that there are multiple NSIs requesting registration, the UE_A 10 may transmit a registration request message for each of the NSIs, or may transmit multiple registration request messages included in one or more RRC messages. Furthermore, the above-described multiple registration request messages included in one or more RRC messages may be transmitted as one registration request message.

The UE_A 10 may include one or more pieces of identification information of the first to sixth identification information in the registration request message, and may indicate, by including the identification information, the support of the SRVCC handover from the NG-RAN_A 120 to the UTRAN_A 20, or the support of the vSRVCC handover from the NG-RAN_A 120 to the UTRAN_A 20.

Specifically, the UE_A 10 may transmit the first identification information and/or the fifth identification information and/or the sixth identification information included in the registration request message to indicate the support of the SRVCC handover from the NG-RAN_A 120 to the UTRAN_A 20. Alternatively, the UE_A 10 may transmit the second identification information and/or the fifth identification information and/or the sixth identification information included in the registration request message to indicate the support of the SRVCC handover from the NG-RAN_A 120 to the UTRAN_A 20. Further, the UE_A 10 may transmit the first identification information and/or the fifth identification information and/or the sixth identification information via the NG-RAN_A 120 to the AMF_A 240 to indicate the support of the SRVCC handover from the NG-RAN_A 120 to the UTRAN_A 20. Alternatively, the UE_A 10 may transmit the second identification information and/or the fifth identification information and/or the sixth identification information via the NG-RAN_A 120 to the AMF_A 240 to indicate the support of the SRVCC handover from the NG-RAN_A 120 to the UTRAN_A 20.

Alternatively, the UE_A 10 may transmit the first identification information and/or the third identification information and/or the fifth identification information and/or the sixth identification information included in the registration request message to indicate the support of the vSRVCC handover from the NG-RAN_A 120 to the UTRAN_A 20. Alternatively, the UE_A 10 may transmit the second identification information and/or the third identification information and/or the fifth identification information and/or the sixth identification information included in the registration request message to indicate the support of the vSRVCC handover from the NG-RAN_A 120 to the UTRAN_A 20. Alternatively, the UE_A 10 may transmit the first identification information and/or the fourth identification information and/or the fifth identification information and/or the sixth identification information included in the registration request message to indicate the support of the vSRVCC handover from the NG-RAN_A 120 to the UTRAN_A 20. Alternatively, the UE_A 10 may transmit the second identification information and/or the fourth identification information and/or the fifth identification information and/or the sixth identification information included in the registration request message to indicate the support of the vSRVCC handover from the NG-RAN_A 120 to the UTRAN_A 20. Alternatively, the UE_A 10 may transmit the third identification information included in the registration request message to indicate the support of the vSRVCC handover from the NG-RAN_A 120 to the UTRAN_A 20. Alternatively, the UE_A 10 may transmit the fourth identification information included in the registration request message to indicate the support of the vSRVCC handover from the NG-RAN_A 120 to the UTRAN_A 20. Furthermore, the UE_A 10 may transmit the first identification information and/or the third identification information and/or the fifth identification information and/or the sixth identification information via the NG-RAN_A 120 to the AMF_A 240 to indicate the support of the vSRVCC handover from the NG-RAN_A 120 to the UTRAN_A 20. Alternatively, the UE_A 10 may transmit the second identification information and/or the third identification information and/or the fifth identification information and/or the sixth identification information via the NG-RAN_A 120 to the AMF_A 240 to indicate the support of the vSRVCC handover from the NG-RAN_A 120 to the UTRAN_A 20. Alternatively, the UE_A 10 may transmit the first identification information and/or the fourth identification information and/or the fifth identification information and/or the sixth identification information via the NG-RAN_A 120 to the AMF_A 240 to indicate the support of the vSRVCC handover from the NG-RAN_A 120 to the UTRAN_A 20. Alternatively, the UE_A 10 may transmit the second identification information and/or the fourth identification information and/or the fifth identification information and/or the sixth identification information via the NG-RAN_A 120 to the AMF_A 240 to indicate the support of the vSRVCC handover from the NG-RAN_A 120 to the UTRAN_A 20.

Here, in a case that the UE_A 10 supports the SRVCC handover from the NG-RAN_A 120 to the UTRAN_A 20, the UE_A 10 may transmit the fifth identification information and/or the sixth identification information. In a case that the UE_A 10 supports the vSRVCC handover from the NG-RAN_A 120 to the UTRAN_A 20, the UE_A 10 may transmit the fifth identification information and/or the sixth identification information.

In a case that present procedure is an initial registration procedure and the UE_A 10 supports the SRVCC handover from the NG-RAN_A 120 to the UTRAN_A 20, the UE_A 10 may transmit the first identification information or the second identification information. In a case that present procedure is the initial registration procedure and the UE_A 10 supports the vSRVCC handover from the NG-RAN_A 120 to the UTRAN_A 20, the UE_A 10 may transmit the third identification information or the fourth identification information.

In a case that the present procedure is a registration update procedure other than a procedure initiated on expiration of a periodic registration update timer, and further, the UE_A 10 supports the SRVCC handover from the NG-RAN_A 120 to the UTRAN_A 20, the UE_A 10 transmits the first identification information or the second identification information. Furthermore, in addition to the above-described conditions, in a case that the UE_A 10 changes information indicated by the fifth identification information and/or the sixth identification information from the previously transmitted information, the UE_A 10 further transmits the first identification information or the second identification information.

In a case that the present procedure is a registration update procedure other than a procedure initiated on expiration of the periodic registration update timer, and further, the UE_A 10 supports the vSRVCC handover from the NG-RAN_A 120 to the UTRAN_A 20, the UE_A 10 may transmit the third identification information or the fourth identification information. Furthermore, in addition to the above-described conditions, in the case that the UE_A 10 changes information indicated by the fifth identification information and/or the sixth identification information from the previously transmitted information, the UE_A 10 may further transmit the third identification information or the fourth identification information.

Note that the initial registration procedure may be a registration procedure performed in a state in which the UE_A 10 is not registered with the network. Furthermore, the registration procedure may be a registration procedure performed on updating location registration information of the UE_A 10 in the network, and/or on regularly notifying the network of a state of the UE_A 10 from the UE_A 10. Furthermore, the registration update procedure may be expressed as a mobility and periodic registration update procedure. Furthermore, the periodic registration update timer may be a timer for managing an interval of the registration update procedure to be perform periodically. Furthermore, the periodic registration update timer may be T3512.

The AMF_A 240 receives the registration request message and/or the control message different from the registration request message and performs first condition determination. The first condition determination is intended to determine whether the network accepts a request from the UE_A 10. The AMF_A 240 initiates the procedure (A) in the present procedure in a case that the first condition determination is true, and initiates the procedure (B) in the present procedure in a case that the first condition determination is false.

Note that the AMF_A 240 may recognize the type of function supported by the UE_A 10 in the first condition determination. Specifically, the AMF_A 240 may receive the first identification information and/or the fifth identification information and/or the sixth identification information from the UE_A 10 to recognize that the UE_A 10 supports the SRVCC handover from the NG-RAN_A 120 to the UTRAN_A 20. Further, the AMF_A 240 may receive the first identification information and/or the fifth identification information and/or the sixth identification information included in the registration request message to recognize that the UE_A 10 supports the SRVCC handover from the NG-RAN_A 120 to the UTRAN_A 20. Furthermore, the AMF_A 240 may receive the first identification information and/or the fifth identification information and/or the sixth identification information via the NG-RAN_A 120 to recognize that the UE_A 10 supports the SRVCC handover from the NG-RAN_A 120 to the UTRAN_A 20. Furthermore, the AMF_A 240 may receive the second identification information and/or the fifth identification information and/or the sixth identification information to recognize that the UE_A 10 supports the SRVCC handover from the NG-RAN_A 120 to the UTRAN_A 20. Furthermore, the AMF_A 240 may receive the second identification information and/or the fifth identification information and/or the sixth identification information included in the registration request message to recognize that the UE_A 10 supports the SRVCC handover from the NG-RAN_A 120 to the UTRAN_A 20. Furthermore, the AMF_A 240 may receive the second identification information and/or the fifth identification information and/or the sixth identification information via the NG-RAN_A 120 to recognize that the UE_A 10 supports the SRVCC handover from the NG-RAN_A 120 to the UTRAN_A 20.

Furthermore, the AMF_A 240 may receive the first information and/or the third identification information and/or the fifth identification information and/or the sixth identification information to recognize that the UE_A 10 supports the vSRVCC handover from the NG-RAN_A 120 to the UTRAN_A 20. Furthermore, the AMF_A 240 may receive the first information and/or the third identification information and/or the fifth identification information and/or the sixth identification information included in the registration request message to recognize that the UE_A 10 supports the vSRVCC handover from the NG-RAN_A 120 to the UTRAN_A 20. Furthermore, the AMF_A 240 may receive the first information and/or the third identification information and/or the fifth identification information and/or the sixth identification information via the NG-RAN_A 120 to recognize that the UE_A 10 supports the vSRVCC handover from the NG-RAN_A 120 to the UTRAN_A 20. Furthermore, the AMF_A 240 may receive the second information and/or the third identification information and/or the fifth identification information and/or the sixth identification information to recognize that the UE_A 10 supports the vSRVCC handover from the NG-RAN_A 120 to the UTRAN_A 20. Furthermore, the AMF_A 240 may receive the second information and/or the third identification information and/or the fifth identification information and/or the sixth identification information included in the registration request message to recognize that the UE_A 10 supports the vSRVCC handover from the NG-RAN_A 120 to the UTRAN_A 20. Furthermore, the AMF_A 240 may receive the second information and/or the third identification information and/or the fifth identification information and/or the sixth identification information via the NG-RAN_A 120 to recognize that the UE_A 10 supports the vSRVCC handover from the NG-RAN_A 120 to the UTRAN_A 20. Furthermore, the AMF_A 240 may receive the first information and/or the fourth identification information and/or the fifth identification information and/or the sixth identification information to recognize that the UE_A 10 supports the vSRVCC handover from the NG-RAN_A 120 to the UTRAN_A 20. Furthermore, the AMF_A 240 may receive the first information and/or the fourth identification information and/or the fifth identification information and/or the sixth identification information included in the registration request message to recognize that the UE_A 10 supports the vSRVCC handover from the NG-RAN_A 120 to the UTRAN_A 20. Furthermore, the AMF_A 240 may receive the first information and/or the fourth identification information and/or the fifth identification information and/or the sixth identification information via the NG-RAN_A 120 to recognize that the UE_A 10 supports the vSRVCC handover from the NG-RAN_A 120 to the UTRAN_A 20. Furthermore, the AMF_A 240 may receive the second information and/or the fourth identification information and/or the fifth identification information and/or the sixth identification information to recognize that the UE_A 10 supports the vSRVCC handover from the NG-RAN_A 120 to the UTRAN_A 20. Furthermore, the AMF_A 240 may receive the second information and/or the fourth identification information and/or the fifth identification information and/or the sixth identification information included in the registration request message to recognize that the UE_A 10 supports the vSRVCC handover from the NG-RAN_A 120 to the UTRAN_A 20. Furthermore, the AMF_A 240 may receive the second information and/or the fourth identification information and/or the fifth identification information and/or the sixth identification information via the NG-RAN_A 120 to recognize that the UE_A 10 supports the vSRVCC handover from the NG-RAN_A 120 to the UTRAN_A 20.

Note that in the present procedure, in addition to the above-described conditions, the UE_A 10 may not include Mobile Station Classmark 3 information in the registration request message. The UE_A 10 may not transmit the mobile station classmark 3 to the AMF_A 240 via the NG-RAN_A 120.

Each step of the procedure (A) in the present procedure will be described below. The AMF_A 240 performs fourth condition determination, and initiates the procedure (A) in the present procedure. The fourth condition determination is to determine whether the AMF_A 240 transmits and/or receives the SM message to/from the SMF_A 230. In a case that the fourth condition determination is true, the AMF_A 240 select the SMF_A 230 and transmits and/or receive the SM message to and/or from the selected SMF_A 230. In a case that the fourth condition determination is false, the AMF_A 240 skips such processes (S1106).

In addition, the AMF _A 240 transmits a Registration Accept message to the UE_A 10 via the gNB_A 122 or the eNB_B 145 based on the reception of the registration request message from the UE_A 10 and/or the completion of the transmission and/or reception of the SM message to and/or from the SMF_A 230 (S1108). Here, the registration accept message included in the control message and the RRC message of the N2 interface may be transmitted and/or received. Furthermore, the registration accept message may be a NAS message to be transmitted and/or received on the N1 interface. In addition, the registration accept message may be a response message to the registration request message.

Note that in a case that the AMF_A 240 receives an SM message indicating rejection from the SMF_A 230, the AMF_A 240 may terminate the procedure (A) in the present procedure, and may initiate the procedure (B) in the present procedure.

Further, in a case that the fourth condition determination is true, the AMF_A 240 may transmit the SM message such as a PDU session establishment accept message (e.g., a PDU session establishment accept message) included in the registration accept message, or may transmit the SM message such as a PDU session establishment accept message (e.g. a PDU session establishment accept message) along with the registration accept message. In addition, this transmission method may be performed in a case that the SM message (e.g., the PDU session establishment request message) is included in the registration request message and the fourth condition determination is true. Furthermore, the transmission method may be performed in a case that the registration request message and the SM message (e.g., the PDU session establishment request message) are included and the fourth condition determination is true. The AMF_A 240 may indicate that the procedure for SM has been accepted by performing such a transmission method.

The AMF_A 240 may include each piece of identification information in the registration acceptance message, may indicate that the request of the UE_A 10 is accepted by including these pieces of identification information and/or transmitting the registration accept message and indicate the capability information indicating whether or not the radio access system and/or the core network support a PDU session function for the voice call service and/or the video call service, or may indicate the capability information indicating whether or not the network the same or different in the same PLMN (access network and/or core network) supports the voice call service and/or the video call service.

Note that the AMF_A 240 may determine whether or not each piece of identification information is to be included in the registration accept message and/or the registration accept message is to be transmitted based on received identification information and/or network capability information and/or an operator policy and/or a network state and/or user registration information (user subscription), and the like.

The UE_A 10 receives the registration accept message via the gNB_A 122 or the eNB_B 145 (S1108). The UE_A 10 receives the registration accept message to recognize the contents of various types of identification information included in the registration accept message.

In addition, based on that the registration accept message includes each identification information and/or that the UE_A 10 receives the registration accept message, the UE_A 10 may recognize whether or not the radio access system and/or the core network which attempt registration by the present procedure support the PDU session function for the voice call service and/or the video call service, or may recognize whether or not the same or the network in the same PLMN (access network and/or core network) supports the voice call service and/or the video call service. Furthermore, the UE_A 10 may store these pieces of information in the context that the UE_A 10 holds.

The UE_A 10 may further transmit a registration completion (Registration Complete) message to the AMF_A 240 (S110). Note that, in a case that the UE_A 10 has received an SM message such as a PDU session establishment accept message, the UE_A 10 may transmit the SM message such as the PDU session establishment complete message included in the registration complete message, or may include the SM message therein to indicate that the procedure for SM is completed. Here, the registration complete message may be a NAS message transmitted and/or received on the N1 interface. In addition, the registration complete message may be a response message to the registration accept message. Further, the registration complete message included in the RRC message and a control message of the N2 interface may be transmitted and/or received.

The AMF _A 240 receives the registration complete message (S1110). In addition, each apparatus completes the procedure (A) in the present procedure based on the transmission and/or reception of the registration accept message and/or the registration complete message.

Next, each step of the procedure (B) in the present procedure will be described. The AMF_A 240 transmits a Registration Reject message to the UE_A 10 via the gNB_A 122 or the eNB_B 145 (S1112) to initiate the procedure (B) in the present procedure. Furthermore, the UE_A 10 recognizes that a request of the UE_A 10 has been rejected by receiving the registration reject message or not receiving the registration accept message. Each apparatus completes the procedure (B) in the present procedure based on the transmission and/or reception of the registration reject message.

Note that, in a case that the fourth condition determination is true, the AMF_A 240 may transmit an SM message such as a PDU session establishment reject message indicating rejection included in the registration reject message, or may include the SM message indicating rejection therein to indicate that the procedure for SM has been rejected. In that case, the UE_A 10 may further receive the SM message, such as the PDU session establishment reject message, that indicates rejection, or may recognize that the procedure for SM has been rejected.

Furthermore, the registration reject message may be a NAS message transmitted/received on the N1 interface. In addition, the registration reject message may be a response message to the registration request message. Further, the registration reject message transmitted by the AMF_A 240 is not limited thereto as long as it is a message for rejecting the request of the UE_A 10. In addition, the registration reject message included in the control message and the RRC message on the N2 interface may be transmitted and/or received.

The UE_A 10 receives the registration reject message to recognize the contents of various types of identification information included in the registration reject message.

Each apparatus completes the registration procedure with respect to the core network, based on completion of the procedure (A) or (B) in the registration procedure illustrated in FIG. 11. Note that each apparatus may transition to a state in which the UE is registered with the core network (RM_REGISTERED state) based on the completion of the procedure (A) of FIG. 11, may maintain a state in which the UE is not registered with the core network (RM_DEREGISTERED state) based on the completion of the procedure (B) of FIG. 11, or may transition to a state in which the UE is not registered with the core network.

Furthermore, each apparatus may perform processing based on the information transmitted and/or received in the registration procedure, based on the completion of the registration procedure. For example, each apparatus may transition to the first state based on the completion of the procedure (A) in the registration procedure, or may not transition to the first state based on the completion of the procedure (B) in the registration procedure. The AMF_A 240 may recognize, based on the completion of the registration procedure, that the UE_A 10 supports the SRVCC handover from the NG-RAN_A 120 to the UTRAN_A 20, or supports the vSRVCC handover from the NG-RAN_A 120 to the UTRAN_A 20.

Furthermore, the first condition determination may be performed based on identification information, and/or subscriber information, and/or an operator policy included in the registration request message. For example, the first condition determination may be true in a case that the network allows a request of the UE_A 10. In addition, the first condition determination may be false in a case that the network does not allow a request of the UE_A 10. Furthermore, the first condition determination may be true in a case that the network of a destination of registration of the UE_A 10 and/or an apparatus in the network supports a function requested by the UE_A 10, and may be false in a case that the network and/or the apparatus does not support the function. Note that conditions for determining whether the first condition determination is true or false may not be limited to the above-described conditions.

The fourth condition determination may also be performed based on whether AMF _A 240 has received an SM and may be performed based on whether a SM message is included in the registration request message. For example, the fourth condition determination may be true in a case that the AMF_A 240 has received the SM and/or the SM message is included in the registration request message, and may be false in a case that the AMF_A 240 has not received the SM and/or the SM message is not included in the registration request message. Note that conditions for determining whether the fourth condition determination is true or false may not be limited to the above-described conditions.

### 3.4. PDU Session Establishment Procedure with IMS

Next, the PDU session establishment procedure performed to establish a PDU session with the IMS will be described. The PDU session establishment procedure is also referred to as the present procedure below. Note that the present procedure is a procedure corresponding to the PDU session establishment procedure (S1040) with the IMS in FIG. 10 described above.

The present procedure is a procedure initiated by the UE_A 10 to establish the PDU session. Note that the PDU session established in the present procedure may be a PDU session established between the UE_A 10 and the IMS. Furthermore, the PDU session established in the present procedure may be a PDU session established via the access network and the core network.

Here, in a case that each apparatus is in the first state, the UE_A 10 can initiate the present procedure at any timing. In other words, each apparatus in the UE_A 10 and/or each apparatus in the network may perform the present procedure based on the completion of the registration procedure with respect to the core network described above, or may perform based on the transition to the first state. Each apparatus may establish the PDU session, based on completion of the present procedure. Furthermore, each apparatus may perform the present procedure multiple times to establish multiple PDU sessions.

Note that the present procedure may include a procedure that is initiated by the UE_A 10 to register with the IMS. Specifically, the UE_A 10 may perform the procedure to register with the IMS, based on the establishment of the PDU session. In this case, each apparatus may, based on the completion of the present procedure, establish a PDU session between the UE_A 10 and the IMS, or transition to the second state. More specifically, each apparatus may be in a state of completion of any or a combination of the registration with the network of the UE (access network, core network, CS network, PDN, DN), and/or the session establishment, and/or the bearer establishment, based on the completion of the present procedure.

### 3.5. Overview of Second Procedure

Next, the second procedure will be described. Hereinafter, a UE configuration update procedure is also referred to as the present procedure. Note that the present procedure corresponds to the second procedure (S1060) in FIG. 10 described above.

The present procedure is a procedure for the SRVCC handover from the NG-RAN_A 120 to the UTRAN_A 20. The present procedure may be a procedure initiated by the NG-RAN_A 120 to be performed, and may be a procedure performed on the UE_A 10 in the second state. Furthermore, the present procedure may be a procedure for the vSRVCC handover from the NG-RAN_A 120 to the UTRAN_A 20.

Here, the SRVCC handover from the NG-RAN_A 120 to the UTRAN_A 20 may mean a handover from the NG-RAN_A 120 to the UTRAN_A 20 using the SRVCC function, or may be expressed as the SRVCC from the NG-RAN_A 120 to the UTRAN_A 20. Furthermore, the vSRVCC handover from the NG-RAN_A 120 to the UTRAN_A 20 may mean a handover from the NG-RAN_A 120 to the UTRAN_A 20 using the vSRVCC function, or may be expressed as the vSRVCC from the NG-RAN_A 120 to the UTRAN_A 20.

Hereinafter, only a case that the present procedure is a procedure for the SRVCC handover from the NG-RAN_A 120 to the UTRAN_A 20 will be described. Note that in a case that the present procedure is a procedure for vSRVCC handover from the NG-RAN_A 120 to the UTRAN A 20, the SRVCC in the following description is replaced with the vSRVCC.

Here, the NG-RAN_A 120 can initiate the present procedure at any timing, in a case that each apparatus is in the second state. In other words, each apparatus may perform the present procedure at any timing after the completion of the registration procedure with the core network, or may perform the present procedure at any timing after the completion of the PDU session establishment procedure with the IMS.

Furthermore, in a case that the present procedure is completed successfully, the UE_A 10 can switch to a target UTRAN_A 20 cell, based on the completion of the present procedure. Furthermore, in a case that the present procedure is failed, the UE_A 10 can switch to the cell of the NG-RAN_A 120 where the UE_A 10 has been served, based on the completion of the present procedure.

Note that the present procedure may include a normal case of the second procedure, an abnormal case 1 of the second procedure, and an abnormal case 2 of the second procedure. Hereinafter, steps of the normal case of the second procedure, the abnormal case 1 of the second procedure, and the abnormal case 2 of the second procedure in the present procedure will be described.

### 3.5.1. Normal Case of Second Procedure

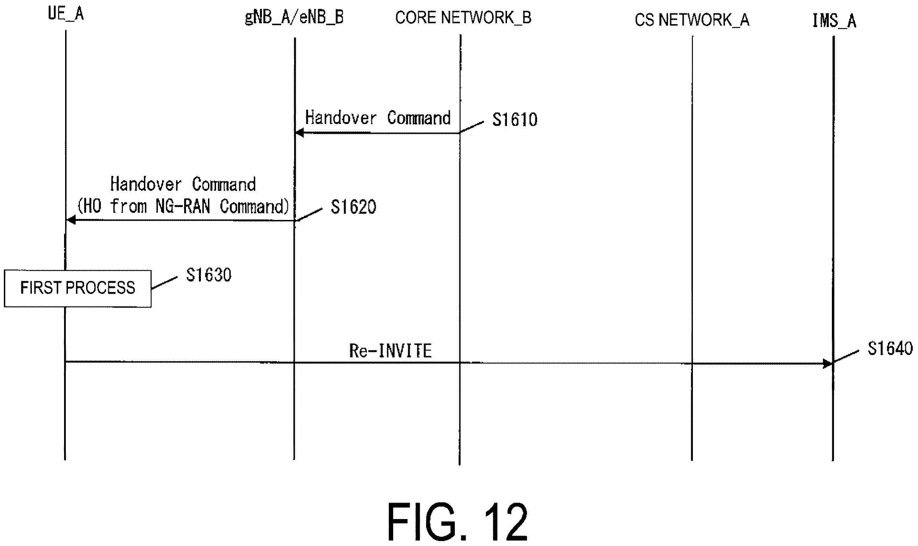

The normal case of the second procedure will be described with reference to FIG. 12. The normal case of the second procedure includes at least a step in which the AMF _A 240 transmits a Handover Command message to the gNB_A 122 or the eNB_B 145 (S1610), a step in which the gNB_A 122 or the eNB_B 145 receiving the handover command message transmits a handover command message to the UE_A 10 (S1620), and a step of performing a first process (S1630).

Specifically, the AMF_A 240 transmits a handover command message to the gNB_A 122 or the eNB_B 145 (S1610).

Subsequently, the gNB_A 122 or the eNB_B 145 transmits a handover command to the UE_A 10 based on the reception of the handover command message from the AMF_A (S1620). Here, the handover command message transmitted to the UE_A 10 from the gNB_A 122 or the eNB_B 145 may be expressed as a handover from NG-RAN command message (handover command message from NG-RAN).

Next, the UE_A 10 receives the handover command message from the gNB_A 122 or the eNB_B 145. Furthermore, the UE_A 10 performs the first process, based on the reception of the handover command (S1630). Furthermore, the UE_A 10 switches a connection destination access network from the NG-RAN_A 120 to the UTRAN _A 20, based on the first process. Here, the first process may be a process that the UE_A 10 detects the SRVCC handover from the NG-RAN_A 120 to the UTRAN_A 20.

Each apparatus completes the normal case of the second procedure as described above, and successfully completes the present procedure. Each apparatus may perform appropriate processing based on the completion of the normal case of the second procedure. For example, the UE_A 10 may hand over from the NG-RAN_A 120 to the UTRAN_A 20 using the SRVCC function, based on the completion of the normal case of the second procedure. Furthermore, the UE_A 10 may continue the voice call or video call that was performed before the handover.

### 3.5.2. Abnormal Case 1 of Second Procedure

The abnormal case 1 of the second procedure will be described with reference to FIG. 12. The abnormal case 1 of the second procedure includes at least a step in which the AMF _A 240 transmits a Handover Command message to the gNB_A 122 or the eNB_B 145 (S1610), a step in which the gNB_A 122 or the eNB_B 145 receiving the handover command message transmits a handover command message to the UE_A 10 (S1620), a step of performing a first process (51630), and a step in which the UE_A 10 transmits a Re-INVITE message to the IMS (S1640).

Specifically, the AMF_A 240 transmits a handover command message to the gNB_A 122 or the eNB_B 145 (S1610).

Subsequently, the gNB_A 122 or the eNB_B 145 transmits a handover command message to the UE_A 10 based on the reception of the handover command message from the AMF_A (S1620). Here, the handover command message transmitted to the UE_A 10 from the gNB_A 122 or the eNB_B 145 may be expressed as a handover from NG-RAN command message.

Next, the UE_A 10 receives the handover command message from the gNB_A 122 or the eNB_B 145. Furthermore, the UE_A 10 performs the first process, based on the reception of the handover command message (S1630). Furthermore, the UE_A 10 attempts to switch a connection destination access network from the NG-RAN_A 120 to the UTRAN_A 20, based on the first process. Here, the first process may be a process that the UE_A 10 detects the SRVCC handover from the NG-RAN_A 120 to the UTRAN_A 20. Furthermore, the first process may be a process that the UE_A 10 attempts the SRVCC handover from the NG-RAN_A 120 to the UTRAN_A 20, but detects a failure.

Note that in the case of the abnormal case 1 of the second procedure, the UE_A 10 cannot switch the connection destination access network from the NG-RAN_A 120 to the UTRAN_A 20. In this case, the UE_A 10 may transmit a Re-INVITE message to the IMS to attempt to return to the connection via the NG-RAN_A 120.

In other words, in a case that the UE_A 10 receives the handover command message, thereafter, encounters a radio level failure, and then, cannot successfully transition to the UTRAN RAT, the UE_A 10 may attempt to return to the connection via the NG-RAN_A 120 by transmitting a re-INVITE message to the IMS. Furthermore, the UE_A 10 may transmit the re-INVITE message to the IMS to initiate an IMS session reestablishment procedure. Note that the IMS session reestablishment procedure may be a procedure for each apparatus to reestablish an IMS session via the NG-RAN_A 120 and/or the AMF_A 240.

Each apparatus completes the abnormal case 1 of the second procedure as described above, and the second procedure is not successfully completed to be failed. Each apparatus may perform appropriate processing based on the completion of the abnormal case 1 of the second procedure. For example, the UE_A 10 may reconnect to the cell of the NG-RAN_A 120 where the UE_A 10 has been served, based on the completion of the abnormal case 1 of the second procedure. Further, each apparatus may reestablish the IMS session via the NG-RAN_A 120 and/or the AMF_A 240.

### 3.6.2. Abnormal Case 2 of Second Procedure

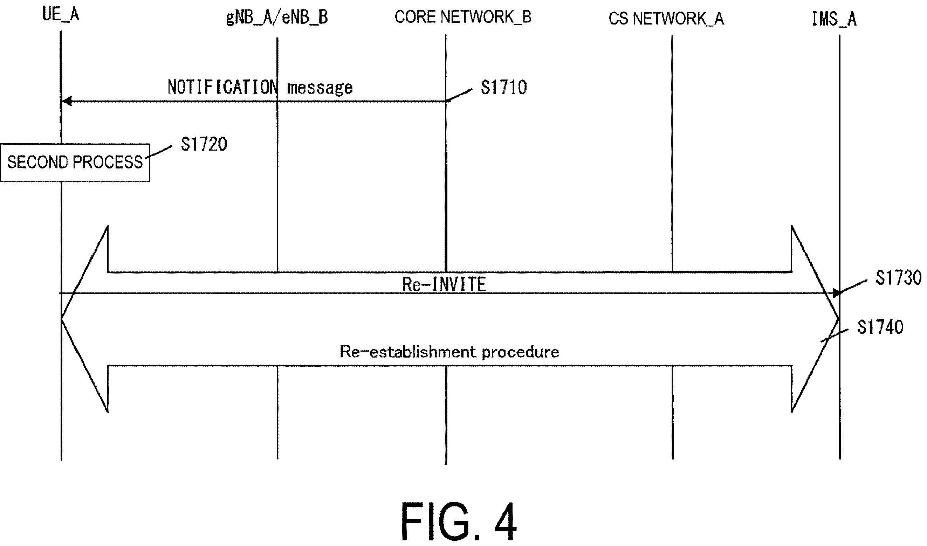

The abnormal case 2 of the second procedure will be described with reference to FIG. 4. The abnormal case 2 of the second procedure includes at least a step in which the AMF _A 240 transmits a Notification message (notification information) to the UE_A 10 (S1710), a step in which the UE_A performs a second process (S1720), a step in which transmits a Re-INVITE message from the UE_A 10 to the IMS, that is, a step for the UE_A to reestablish a session (S1730), and/or a step of performing the IMS session reestablishment procedure (S1740).

Specifically, the AMF_A 240 transmits a notification message to the UE_A 10 (S 1710). The AMF_A 240 may transmit the notification message to the UE_A 10 via the gNB_A 122 or the eNB_B 145.

Note that the AMF_A 240 may transmit the notification message to the UE_A 10 in a case that the AMF _A 240 receives a notification indicating that a session mobility procedure is ongoing from the server device of the CS network_A 290, or may notify the UE_A 10 of the initiation of the IMS session reestablishment procedure by transmitting the notification message.

Here, the AMF_A 240 may include the seventh identification information in the notification message, thereby to indicate that SRVCC handover from the NG-RAN_A 120 to the UTRAN_A 20 is canceled. Furthermore, the AMF_A 240 may return the state of the AMF_A 240 to the state before initiating the procedure for the SRVCC handover from the NG-RAN_A 120 to the UTRAN_A 20. In other words, in a case that the NG-RAN_A 120 decides to stop the procedure for the SRVCC handover from the NG-RAN_A 120 to the UTRAN_A 20 before completion, the AMF_A 240 may return the state of the AMF_A 240 to the state before initiating the procedure for the SRVCC handover from the NG-RAN_A 120 to the UTRAN_A 20. Note that the notification message transmitted from the AMF_A 240 to the UE_A 10 may be expressed as a Session reestablishment trigger notification message.

Next, the UE_A 10 receives the notification message from the AMF_A 240. The UE_A 10 performs the second process, based on the reception of the notification message (S 1720). Here, the second process may be a process that the UE_A 10 authenticates the cancellation of the SRVCC handover from the NG-RAN_A 120 to the UTRAN_A 20. Further, the second process may be a process performed based on the seventh identification information. Furthermore, the second process may be a process that the UE_A 10 provides a notification indicator to the higher layer. To be more specific, the second process may be a process that in a case that the UE receives the notification message, a 5G Session Management (5GSM) protocol entity within the UE_A provides the notification indicator to the higher layer. Here, the higher layer may be an application layer, a layer for processing the IMS function, or a layer higher than the 5GSM protocol, for example.

Note that the notification indicator may be information indicating that the SRVCC handover from the NG-RAN_A 120 to the UTRAN_A 20 is canceled, or information indicating that a procedure for reestablishing the IMS session is necessary to be performed.

Next, the UE_A 10 initiates the IMS session reestablishment procedure, based on the second process (S 1740). Specifically, the UE_A 10 may transmit a Re-INVITE message to the IMS (S 1730), and attempt to return to the connection via the NG-RAN_A 120 to initiate the IMS session reestablishment procedure (S1740). The transmission of the Re-INVITE message to the IMS (S 1730) may be included in the IMS session reestablishment procedure (S 1740) to be performed.

Note that the IMS session reestablishment procedure may be a procedure for each apparatus to reestablish an IMS session via the NG-RAN_A 120 and/or the AMF_A 240. The IMS session reestablishment procedure may be expressed as a recovery procedure. Furthermore, the IMS session reestablishment procedure may be a procedure to be initiated in accordance with the transmission of the re-INVITE message by the UE_A 10. In the IMS session reestablishment, in a case that the IMS session attempted to be reestablished is not valid, a session mobility request in the session mobility procedure described above may be rejected from the IMS.

Each apparatus completes the abnormal case 2 of the second procedure as described above, and the second procedure is not successfully completed to be failed. Each apparatus may perform appropriate processing based on the completion of the abnormal case 2 of the second procedure. For example, the UE_A 10 may reconnect to the cell of the NG-RAN_A 120 where the UE_A 10 has been served, based on the completion of the abnormal case 2 of the second procedure. Further, each apparatus may reestablish the IMS session via the NG-RAN_A 120 and/or the AMF_A 240.

### 4. Modified Examples

A program running on an apparatus according to the present invention may serve as a program that controls a Central Processing Unit (CPU) and the like to cause a computer to operate in such a manner as to realize the functions of the embodiment according to the present invention. Programs or information handled by the programs are temporarily stored in a volatile memory such as a Random Access Memory (RAM), a non-volatile memory such as a flash memory, a Hard Disk Drive (HDD), or another storage device system.

Note that a program for realizing such the functions of the embodiment according to the present invention may be recorded on a computer-readable recording medium. This configuration may be realized by causing a computer system to read the program recorded on the recording medium and to perform the program. It is assumed that the "computer system" refers to a computer system built into the apparatuses, and the computer system includes an operating system and hardware components such as a peripheral device. Furthermore, the "computer-readable recording medium" may be a semiconductor recording medium, an optical recording medium, a magnetic recording medium, a medium dynamically holding the program for a short time, or any other computer readable recording medium.

Furthermore, each functional block or various characteristics of the apparatuses used in the above-described embodiment may be implemented or performed on an electric circuit, for example, an integrated circuit or multiple integrated circuits. An electric circuit designed to perform the functions described in the present specification may include a general-purpose processor, a Digital Signal Processor (DSP), an Application Specific Integrated Circuit (ASIC), a Field Programmable Gate Array (FPGA), or other programmable logic devices, discrete gates or transistor logic, discrete hardware components, or a combination thereof. The general-purpose processor may be a microprocessor, or may be a known processor, a controller, a micro-controller, or a state machine. The above-mentioned electric circuit may include a digital circuit, or may include an analog circuit. Furthermore, in a case that a circuit integration technology that replaces the present integrated circuit appears with advances in semiconductor technology, one or more aspects of the present invention can also use a new integrated circuit based on the technology.

Note that the invention of the present patent application is not limited to the above-described embodiments. In the embodiment, apparatuses have been described as an example, but the invention of the present application is not limited to these apparatuses, and is applicable to a terminal apparatus or a communication apparatus of a fixed-type or a stationary-type electronic apparatus installed indoors or outdoors, for example, an AV apparatus, a kitchen apparatus, a cleaning or washing machine, an air-conditioning apparatus, office equipment, a vending machine, and other household apparatuses.

The embodiments of the present invention have been described in detail above referring to the drawings, but the specific configuration is not limited to the embodiments and includes, for example, an amendment to a design that falls within the scope that does not depart from the present invention. Various modifications are possible within the scope of the present invention defined by claims. Furthermore, a configuration in which constituent elements, described in the respective embodiments and having mutually the same effects, are substituted for one another is also included in the technical scope of the present invention.

### Reference Signs List

1 Mobile communication system
5 DN A
6 PDN_A
7 IMS_A
10 UE_A
30 PGW_A
35 SGW_A
45 eNB_A
40 MME_A
50 HSS_A
80 Access network_A
81 Access network_A'
90 Core network_A
120 Access network_B
122 gNB_A
145 eNB_B
190 Core network_B
230 SMF_A
235 UPF_A
240 AMF_A
245 UDM_A
290 CS network_A
300 P-CSCF_A
320 S-CSCF_A
340 SCC AS_A

## Claims

1. A User Equipment, UE (10), comprising:
a controller (500) configured to set, in a registration request message, first identification information, a Mobile Station Classmark 2, and supported codecs, in a case that the UE supports Single Radio Voice Call Continuity, SRVCC, from a Next Generation Radio Access Network, NG-RAN, to a Universal Terrestrial Radio Access Network, UTRAN; and
a transmission and reception unit (520) configured to transmit the registration request message to a core network (90, 190, 290), in a case that (i) the UE (10) supports the SRVCC from the NG-RAN to the UTRAN, and (ii) the UE (10) changes at least the supported codecs, wherein
the first identification information is capability information indicating support of the SRVCC from the NG-RAN to the UTRAN.

2. A communication method performed by a User Equipment, UE (10), the communication method comprising:
setting, in a registration request message, first identification information, a Mobile Station Classmark 2, and supported codecs, in a case that the UE (10) supports Single Radio Voice Call Continuity, SRVCC, from a Next Generation Radio Access Network, NG-RAN, to a Universal Terrestrial Radio Access Network, UTRAN; and
transmitting the registration request message to a core network (90, 190, 290), in a case that (i) the UE (10) supports the SRVCC from the NG-RAN to the UTRAN, and (ii) the UE (10) changes at least the supported codecs,
wherein
the first identification information is capability information indicating support of the SRVCC from the NG-RAN to the UTRAN.

## Patentansprüche

1. Nutzerendgerät, UE (10), aufweisend:
einen Controller (500), der dafür konfiguriert ist, in einer Registrierungsanfrage-Nachricht eine erste Identifizierungsinformation, eine Mobile Station Classmark 2 und unterstützte Codecs einzustellen, falls das UE einen Single Radio Voice Call Continuity, SRVCC, von einem Funkzugangsnetzwerk der nächsten Generation, NG-RAN, zu einem universellen terrestrischen Funkzugangsnetzwerk, UTRAN, unterstützt; und
eine Übertragungs- und Empfangseinheit (520), die dafür konfiguriert ist, die Registrierungsanfrage-Nachricht zu einem Kernnetzwerk (90, 190, 290) zu übertragen, falls (i) das UE (10) den SRVCC vom NG-RAN zum UTRAN unterstützt und (ii) das UE (10) zumindest die unterstützten Codecs ändert, wobei
die erste Identifizierungsinformation eine Befähigungsinformation ist, die eine Unterstützung des SRVCC vom NG-Ran zum UTRAN angibt.

2. Kommunikationsverfahren, das von einem Nutzerendgerät, UE (10), durchgeführt wird, wobei das Kommunikationsverfahren aufweist:
Einstellen, in einer Registrierungsanfrage-Nachricht, einer ersten Identifizierungsinformation, einer Mobile Station Classmark 2 und unterstützter Codecs, falls das UE (10) einen Single Radio Voice Call Continuity, SRVCC, von einem Funkzugangsnetzwerk der nächsten Generation, NG-RAN, zu einem universellen terrestrischen Funkzugangsnetzwerk, UTRAN, unterstützt; und
Übertragen der Registrierungsanfrage-Nachricht zu einem Kernnetzwerk (90, 190, 290), falls (i) das UE (10) den SRVCC vom NG-RAN zum UTRAN unterstützt und (ii) das UE (10) zumindest die unterstützten Codecs ändert, wobei
die erste Identifizierungsinformation eine Befähigungsinformation ist, die eine Unterstützung des SRVCC vom NG-Ran zum UTRAN angibt.

## Revendications

1. Équipement utilisateur, UE (10), comprenant :
un dispositif de commande (500) configuré pour définir, dans un message de demande d'enregistrement, des premières informations d'identification, une marque de classe 2 de station mobile et des codées pris en charge, dans le cas où l'UE prend en charge la continuité des appels vocaux radio unique, SRVCC, à partir d'un réseau d'accès radio de nouvelle génération, NG-RAN, vers un réseau d'accès radio terrestre universel, UTRAN ; et
une unité de transmission et de réception (520) configurée pour transmettre le message de demande d'enregistrement à un réseau central (90, 190, 290), dans le cas où (i) l'UE (10) prend en charge la SRVCC du NG-RAN au UTRAN, et (ii) l'UE (10) change au moins les codées pris en charge, dans lequel
les premières informations d'identification sont des informations de capacité indiquant la prise en charge de la SRVCC du NG-RAN à l'UTRAN.

2. Procédé de communication réalisé par un équipement utilisateur, UE (10), le procédé de communication comprenant les étapes de :
définir, dans un message de demande d'enregistrement, des premières informations d'identification, d'une marque de classe 2 de station mobile et de codées pris en charge, dans le cas où l'UE (10) prend en charge la continuité des appels vocaux radio unique, SRVCC, d'un réseau d'accès radio de nouvelle génération, NG-RAN, à un réseau d'accès radio terrestre universel, UTRAN ; et
transmettre le message de demande d'enregistrement à un réseau central (90, 190, 290), dans le cas où (i) l'UE (10) prend en charge la SRVCC du NG-RAN à l'UTRAN, et (ii) l'UE (10) change au moins les codées pris en charge, dans lequel
les premières informations d'identification sont des informations de capacité indiquant la prise en charge de la SRVCC du NG-RAN à l'UTRAN.
